(19) **Europäisches Patentamt**

**European Patent Office**

**Office européen des brevets**

(11) Veröffentlichungsnummer: **0 074 097**
**B1**

(12) **EUROPÄISCHE PATENTSCHRIFT**

(45) Veröffentlichungstag der Patentschrift:
04.09.85

(51) Int. Cl.⁴: **A 01 D 69/06**, A 01 F 12/56

(21) Anmeldenummer: **82108145.2**

(22) Anmeldetag: **03.09.82**

(54) Antriebsvorrichtung für eine landwirtschaftlich nutzbare Maschine.

(30) Priorität: **04.09.81 US 299277**
**06.07.82 US 395767**

(43) Veröffentlichungstag der Anmeldung:
**16.03.83 Patentblatt 83/11**

(45) Bekanntmachung des Hinweises auf die Patenterteilung:
**04.09.85 Patentblatt 85/36**

(84) Benannte Vertragsstaaten:
**BE DE FR GB IT**

(56) Entgegenhaltungen:
**DE - A - 2 354 440**
**US - A - 4 138 837**

(73) Patentinhaber: **DEERE & COMPANY, 1 John Deere Road, Moline Illinois 61265 (US)**

(72) Erfinder: **Love, Mahlon Lloyd, R.R. '1, Osco Illinois 61274 (US)**
Erfinder: **Corkery, Leon Joseph, 1903 46th Street, Moline Illinois 61265 (US)**
Erfinder: **Hawkins, Robert Wayne, 1724 - 7th Ave A Box 221, Rapids City Illinois 61278 (US)**

(74) Vertreter: **Sartorius, Peter et al, DEERE & COMPANY European Office, Patent Department Postfach 503 Steubenstrasse 36-42, D-6800 Mannheim 1 (DE)**

ACTORUM AG

## Beschreibung

Die Erfindung bezieht sich auf eine Antriebsvorrichtung für eine landwirtschaftlich nutzbare Maschine mit einem mindestens zwei Drehzahlbereiche aufweisenden Getriebe, insbesondere Planetengetriebe, das innerhalb einer Aussparung einer Zugmittelscheibe integriert ist, der ein Kupplungselement, z.B. ein Drehmomentkreuz oder ein Drehmomentenrad, zugeordnet ist, das zur Getriebeschaltung auf einer Welle des Getriebes drehbar gelagert ist und einmal ein Eingangsteil, z.B. ein Eingangssonnenrad, des Getriebes am Gehäuse der Maschine und zum anderen an der Zugmittelscheibe festlegt.

Es ist bereits eine Antriebsvorrichtung für einen Mähdrescher bekannt (US-A-4 138 837), die ein stufenlos einstellbares Zugmittelgetriebe aufweist, dessen getriebene Zugmittelscheibe mit einem Planetengetriebe antriebsverbunden ist, das hierzu eine Welle aufweist, auf der auch die Zugmittelscheibe angeordnet ist. Das Planetengetriebe befindet sich im Bereich der Stirnseite der nicht verstellbaren Zugmittelscheibe und ist hierzu in einem besonderen Getriebegehäuse untergebracht. Dadurch wird die Gesamtbreite der Antriebsvorrichtung relativ breit, so dass die Antriebsvorrichtung seitlich der Mähdrescherwand relativ viel Platz beansprucht. Das Planetengetriebe lässt sich über eine aufwendige Stellvorrichtung wechselweise auf zwei Drehzahlbereiche einstellen. Diese Stellvorrichtung weist einen Schaltnocken auf, der über ein axial verstellbares, im Gehäuse des Getriebes vorgesehenes Gestänge betätigt werden kann.

Es ist ferner ein Dreschtrommelantrieb mit einem grossen Regelbereich für Mähdrescher bekannt (DE-A-2 354 440), wobei ausserhalb der Dreschtrommelwand auf der Dreschtrommelwelle ein Planetengetriebe angeordnet ist, dessen Gehäuseumfang zur Aufnahme von Antriebsmitteln ausgebildet und über einen Trieb mit konstanter Übersetzung von einem ausserhalb des Bereiches des Triebrades angeordneten, stufenlos regelbaren Getriebe antreibbar ist. Hierzu ist zwischen der Dreschtrommelwand und dem Gehäuse eine Tellerscheibe angeordnet, die über eine Stirnradbuchse mit dem Umlaufrädergetriebe in Verbindung steht, wobei zur Getriebeschaltung die Tellerscheibe wahlweise mit der Dreschtrommelwand oder mit dem Getriebegehäuse, vorzugsweise über eine Innensechskantschraube und eine an der Dreschtrommelwand und an der Tellerscheibe angeordnete Gewindebuchse, verbindbar ist. Hierdurch erhält man zwar eine platzsparende Anordnung für das Umlaufrädergetriebe, da dieses in der Antriebsscheibe integriert ist. Jedoch ist dieses vor Überlastung der einzelnen Antriebsorgane weitgehend ungeschützt.

Demgegenüber liegt der Erfindung die Aufgabe zugrunde, die Antriebsvorrichtung derart auszubilden und anzuordnen, dass neben einer platzsparenden Anordnung bei auftretender Überlast eine Beschädigung der einzelnen Antriebsorgane vermieden wird. Diese Aufgabe ist dadurch gelöst worden, dass zwischen dem Kupplungselement und dem Gehäuse ein als Überlastsicherung ausgebildeter Lenker vorgesehen ist, der über einen Abscherbolzen an das Kupplungselement oder an das Gehäuse angeschlossen ist. Auf diese Weise wird neben einer optimalen Unterbringung des Planetengetriebes innerhalb der Zugmittelscheibe auch sichergestellt, dass bei auftretender Überlast automatisch eine Abschaltung des Planetengetriebes bzw. eine automatische Unterbrechung der Antriebsverbindung zwischen dem Getriebe und den anzutreibenden Arbeitsorganen erfolgt. Wird die Verbindung zwischen dem Kupplungselement und dem Gehäuse bei Überlast unterbrochen, so kann das auf der Welle angeordnete Kupplungselement mit der Zugmittelscheibe frei drehen, ohne dass es mit den drehenden Teilen der Zugmittelscheibe kollidiert. Hierzu ist es vorteilhaft, dass das Kupplungselement als Drehmomentenkreuz ausgebildet ist, das auf der Welle drehbar und feststellbar gelagert und mit dem Eingangsteil fest verbunden ist. Ferner ist es vorteilhaft, dass der Lenker der Überlastsicherung einenends an einen Stellarm des Drehmomentenkreuzes und anderenends mittel- oder unmittelbar an einen Rahmen bzw. an das Gehäuse der Maschine gelenkig angeschlossen ist. Tritt also bei niedriger Drehzahl und grösserer Drehmomentenübertragung eine Überlast auf, so kann der zwischen dem Lenker und dem Kupplungselement vorgesehene Abscherbolzen auf einfache Weise abgeschert und die Antriebsverbindung zwischen der Zugmittelscheibe und dem Planetengetriebe getrennt werden.

In weiterer Ausgestaltung der Erfindung ist es vorteilhaft, dass der Lenker der Überlastsicherung an ein am Rahmen der Maschine schwenkbar gelagertes Gestänge gelenkig angeschlossen is, das nach Lösen vom Lenker über eine Feder in eine die Drehbewegung des Drehmomentenkreuzes nicht behindernde Stellung selbsttätig verschwenkbar ist. Da der Drehmomentenarm auf einfache Weise über den Lenker und das Gestänge am Gehäuse der Maschine festlegbar ist, können nach Abscheren des Abscherbolzens zwischen dem Drehmomentenarm und dem Lenker der Lenker und das Gestänge sofort nach oben verschwenkt werden, so dass bei Weiterdrehen des Drehmomentenarmes keine Beschädigung am Lenker sowie am Drehmomentenarm auftritt. Diese Antriebsvorrichtung eignet sich insbesondere zum Antrieb der Dreschtrommel eines Mähdreschers und gewährleistet, dass bei zu starker Beschickung der Dreschtrommel mit Erntegut eine Abschaltung der Dreschtrommel vom Antrieb automatisch erfolgt.

Vorteilhaft ist es ausserdem, dass das Planetengetriebe in einem Gehäuse angeordnet ist, das Bestandteil der Zugmittelscheibe ist, wobei die sich in Achsrichtung der Welle erstreckende Breite des Planetengetriebes in etwa der Gesamtbreite der Zugmittelscheibe entspricht, die dicht an einer Seitenwand des Gehäuses des Mähdreschers angeordnet ist. Durch die vorteilhafte Ausbildung und Anordnung der Zugmittelscheibe lässt sich das Planetengetriebe auf einfache Weise zwischen den beiden Stirnflächen der Zugmittelscheibe unterbringen, so dass der Platzbedarf für die Zugmittelscheibe und das Planetengetriebe relativ klein gehalten werden kann, so dass die Zugmittelscheibe auf platzsparende Weise zum mittel- bzw. unmittelbaren Antrieb der Dreschtrommel ohne weiteres an der Aussenseite des Mähdreschers untergebracht werden kann. Hierzu ist es vorteilhaft, dass das Planetengetriebe aus einem auf der Welle drehfest gelägerten ersten Sonnenrad und einem zweiten auf der Welle drehbar gelagerten und mit dem Drehmomentenkreuz fest verbundenen Sonnenrad sowie einem Doppelplanetenrad gebildet ist, das über einen Planetenträger an die Aussenseite der Zugmittelscheibe angeschlossen ist, wobei das erste Sonnenrad grösser als das zweite Sonnenrad ist, so dass bei zugeschaltetem Planetengetriebe für indirekten Antrieb die Drehzahl der Welle kleiner ist als die Drehzahl der Zugmittelscheibe. Auch bei Verwendung des Planetengetriebes lässt sich auf einfache Weise eine direkte Antriebsverbindung zwischen der Zugmittelscheibe und der Welle zum Antrieb der Dreschtrommel herstellen. Ferner ist es möglich, auf einfache Weise die Welle der Dreschtrommel wesentlich langsamer oder schneller anzutreiben als die Zugmittelscheibe. Hierzu ist es vorteilhaft, dass das in der Zugmittelscheibe integrierte Gehäuse aus einem Scheibenkranz, einer mit Bezug auf die Seitenwand des Mähdreschers innenliegenden Seitenwand und einer aussenliegenden Seitenwand gebildet ist, wobei die aussenliegende Seitenwand als Planetenträger ausgebildet ist, der über Schraubenbolzen lösbar mit der Zugmittelscheibe verbunden ist. Vorteilhaft ist es ausserdem, dass in einer jeden Seitenwand des Gehäuses zur Aufnahme des Planetengetriebes ein koaxial zur Welle angeordnetes Wälzlager zur drehbaren Aufnahme der Zugmittelscheibe vorgesehen ist. Ferner ist es vorteilhaft, dass das zweite Sonnenrad eine sich axial erstreckende Nabe zur Aufnahme des in der aussenliegenden Seitenwand angeordneten Wälzlagers aufweist. Da der Drehmomentarm auf der Nabe des Eingangssonnenrades des Planetengetriebes angeordnet ist, lässt sich auf einfache Weise das Eingangssonnenrad mit Bezug auf die Seitenwand bzw. den Rahmen des Mähdreschers festlegen, so dass über die Zugmittelscheibe der Antrieb über das Planetengetriebe erfolgt und dabei die Unter- oder Übersetzung zwischen den Planetenrädern und den Sonnenrädern genutzt werden kann. Ferner kann über den Drehmomentarm auch das Eingangssonnenrad mit der Zugmittelscheibe drehfest verbunden werden, so dass das Planetengetriebe ausgeschaltet und der Antrieb der Zugmittelscheibe direkt auf die Welle geleitet wird. Ist die Antriebsverbindung zwischen der Zugmittelscheibe und dem Drehmomentenarm gelöst und ist dieser auch nicht an das Gehäuse des Mähdreschers festgelegt, so ist die Antriebsverbindung zwischen der Zugmittelscheibe und der Welle zum Antrieb der Dreschtrommel unterbrochen. Hierzu ist es vorteilhaft, dass auf der Nabe des zweiten Sonnenrades das Drehmomentenkreuz drehfest angeordnet ist.

In weiterer Ausgestaltung der Erfindung ist es vorteilhaft, dass ein Stellarm des Drehmomentenkreuzes über ein lösbares Verbindungselement, z.B. einen Bolzen, an die Zugmittelscheibe wahlweise anschliessbar ist, das in eine am Stellarm vorgesehene Aussparung und in eine zu dieser ausrichtbare Aussparung an der Zugmittelscheibe einsetzbar ist. Ausserdem ist es vorteilhaft, dass das Kupplungselement aus einem Drehmomentenkreuz mit zwei sich radial erstreckenden Stellarmen besteht, wobei der eine eine Aussparung aufweisende Arm wahlweise an die Zugmittelscheibe und der andere Arm über den Abscherbolzen wahlweise an das Gehäuse eines Mähdreschers anschliessbar ist, wobei die Anschlussstellen der Arme auf unterschiedlich grossen Radien liegen. Eine kompakte Bauweise für die Zugmittelscheibe und den Drehmomentenarm erhält man dadurch, dass das Drehmomentenkreuz dicht an der Aussenseite der Zugmittelscheibe angeordnet ist und dass die Zugmittelscheibe zwei parallel zueinander verlaufende Stirnflächen aufweist, die untereinander einen Abstand aufweisen, der grösser ist als die Gesamtbreite des Planetengetriebes.

In weiterer Ausgestaltung der Erfindung ist es vorteilhaft, dass die antreibbare Zugmittelscheibe einen Scheibenteil aufweist, auf den der Antrieb eingeleitet wird und der für eine erste Antriebsgeschwindigkeit wahlweise mit der Welle drehfest verbindbar ist, wobei das Eingangssonnenrad des Planetengetriebes für eine zweite Antriebsgeschwindigkeit wahlweise mit einem Dreschgehäuse mittel- oder unmittelbar drehfest verbindbar ist. Vorteilhaft ist es ferner, dass neben der antreibbaren Zugmittelscheibe eine zweite Zugmittelscheibe auf der Welle angeordnet und mit dieser drehfest verbunden ist, wobei die erste Zugmittelscheibe für ein Verbindungselement, z.B. eine Steckverbindung, wahlweise an die drehfeste Zugmittelscheibe anschliessbar ist oder das mit dem Eingangssonnenrad drehfest verbundene Drehmomentenrad über das gleiche Verbindungselement wahlweise mit einem Dreschgehäuse mittel- oder unmittelbar verbindbar ist. Durch die vorteilhafte Anordnung einer zweiten Zugmittelscheibe, die neben der ersten Zugmittelscheibe drehfest auf der Welle angeordnet ist, kann die erste Zugmittelscheibe auf einfache Weise mit der Welle drehfest verbunden werden, so dass der auf die erste Zugmittelscheibe eingeleitete Antrieb über die zweite Zugmittelscheibe direkt auf die Welle geleitet wird, so dass die Welle sowie die beiden Zugmittelscheiben mit der gleichen Drehzahl umlaufen. Zum drehfesten Anschluss der ersten Zugmittelscheibe an die zweite Zugmittelscheibe dient lediglich ein Verbindungselement, das wahlweise eine drehfeste Verbindung zwischen den beiden Zugmittelscheiben herstellen kann. Soll die Antriebsverbindung zwischen den beiden Zugmittelscheiben aufgehoben werden, so kann das gleiche Verbindungselement auch zur drehfesten Verbindung des Eingangssonnenrades mit dem Drehmomentenrad dienen. Um auf einfache Weise die erste Zugmittelscheibe an die zweite Zugmittelscheibe anschliessen zu können, weist diese einen Flansch auf, der innerhalb der axialen Ausdrehung des Scheibenteiles liegt, auf den der Antrieb eingeleitet wird. Auf diese Weise erhält man eine sehr raum- und platzsparende Anordnung beider Zugmittelscheiben.

Da das Verbindungselement mindestens einen Bolzen aufweist, der in eine im Flansch der drehfesten Zugmittelscheibe und in eine in der ersten Zugmittelscheibe vorgesehenen Bohrung einsteckbar ist, kann in kürzester Zeit eine drehfeste Verbindung zwischen den beiden Zugmittelscheiben geschaffen werden, ohne dass zusätzliche Arbeitswerkzeuge erforderlich sind.

Vorteilhaft ist es ferner, dass das auf der Nabe des Eingangssonnenrades angeordnete Drehmomentenrad ein Ringrad aufweist, an dem mittels eines Abscherbolzens ein eine Anschlussöse aufweisendes Verbindungsstück angeschlossen ist, das mit einer Nut versehen ist, die auf einer am Aussenumfang des Drehmomentenrades vorgesehenen Rippe aufgesetzt ist. Tritt beispielsweise an der Welle bzw. an den Arbeitswerkzeugen eine Überlast auf, so kann auf einfache Weise durch Abscheren des Abscherbolzens die Antriebsverbindung zwischen der Zugmittelscheibe und der Welle unterbrochen werden, so dass eine Beschädigung der Arbeitsorgane vermieden wird. Hierzu ist es vorteilhaft, dass das Drehmomentenrad eine sich vom Aussenumfang radial nach innen erstreckende Bohrung aufweist, in die der Abscherbolzen einsteckbar ist, der zum lösbaren Anschluss eines die Anschlussöse aufweisenden Gestänges dient, das mit seinem einen Ende am Rahmen des Mähdreschers um eine Achse schwenkbar gelagert ist, die parallel zur Achse des Drehmomentenrades verläuft, wobei das Gestänge nach Abscheren des Abscherbolzens über eine an das Gestänge angeschlossene Feder von dem Drehmomentenrad wegschwenkbar ist. Ausserdem ist es vorteilhaft, dass zwischen dem Gestänge und dem Drehmomentenrad ein Scherbolzenanschlussteil vorgesehen ist, das einenends die Anschlussöse mit einer parallel zur Achse des Drehmomentenrades verlaufenden Bohrung zum gelenkigen Anschluss des Gestänges und anderenends die radial zur Achse des Drehmomentenrades verlaufende Bohrung zur Aufnahme des Abscherbolzens aufweist, die sich durch die auf die Rippe aufsetzbare Nut erstreckt, wobei das Verbindungsstück im Bereich der oberen durch eine Totpunktlage verlaufenden Stelle des Drehmomentenrades an das Drehmomentenrad angeschlossen ist. Da der Scherbolzenanschlussteil mit dem Gestänge zum Festlegen des Eingangssonnenrades an den Aussenumfang, und zwar im Bereich der oberen bzw. eine Totpunktlage durchlaufenden Stelle des Drehmomentenrades, am Drehmomentenrad angeschlossen ist, wird bei Überlast auf einfache Weise der Abscherbolzen zwischen dem Scherbolzenanschlussteil und der ersten Zugmittelscheibe abgeschert und somit die Antriebsverbindung unterbrochen. Gleichzeitig wird der Lenker mit dem Scherbolzenanschlussteil so weit zurückgeschwenkt, dass keine Kollision mit der Zugmittelscheibe enstehen kann. Soll der Lenker wieder an das Drehmomentenrad herangeschwenkt werden, so ist hierzu an dem Gestänge ein sich über das abscherseitige Ende des Gestänges erstreckender Hebel zur Verschwenkung des Gestänges gegen die Wirkung einer Feder in Richtung des Drehmomentenrades vorgesehen, der nach Abscheren des Abscherbolzens mittels der Feder gegen einen Anschlag heranziehbar ist, so dass der Hebel eine weitere Drehung der Zugmittelscheibe nicht behindert. Der Hebel erleichtert also auch nach Lösen der Verbindung zwischen dem Lenker und dem Drehmomentenrad eine erneute Ankupplung des Lenkers an das Drehmomentenrad, da dieses mit geringem Kraftaufwand an das Drehmomentenrad herangeschwenkt werden kann. Vorteilhaft ist es ferner, dass die Abscheroberfläche, gegen die das Scherbolzenanschlussteil anliegt, konzentrisch zur Achse des Drehmomentenrades verläuft. Ebenso ist es vorteilhaft, dass der Radius der Abscheroberfläche des Scherbolzenanschlusteiles grösser ist als der Radius des Ringrades. Ausserdem ist es vorteilhaft, dass die mit der Welle drehfest verbundene Zugmittelscheibe zum Antrieb einer Strohleittrommel dient. Da die Aussenoberfläche des Drehmomentenrades eine Rippe aufweist und der Lenker bzw. das Scherbolzenanschlussteil mit einer Nut versehen ist, lässt sich auf einfache Weise der Lenker am Drehmomentenrad seitlich fixieren, wobei nur durch geringfügige Verstellung des Drehmomentenrades die beiden Bohrungen im Drehmomentenrad und an dem Verbindungsstück ohne weiteres zueinander ausgerichtet werden können, um den Abscherbolzen einführen zu können. Da die mit der Welle drehfest verbundene Zugmittelscheibe zum Antrieb der Strohleittrommel dient, wird je nach Antriebsart die Strohleittrommel einmal schneller bzw. langsamer angetrieben, so wie das auch beim Antrieb der Dreschtrommel der Fall ist.

In der Zeichnung sind zwei Ausführungsbeispiele einer Antriebsvorrichtung nach der Erfindung schematisch dargestellt. Es zeigt:

Fig. 1 eine schematische Darstellung einer Antriebsvorrichtung für eine Dreschtrommel eines Mähdreschers, wobei Teile der Antriebsvorrichtung der besseren Darstellung wegen fortgelassen sind;

Fig. 2 einen Längsschnitt durch eine Zugmittelscheibe entlang der Linie 2-2 gemäss Fig. 1 zum Antrieb der Dreschtrommel;

Fig. 3 eine ähnliche Ansicht wie in Fig. 2 jedoch in kleinerem Massstab, wobei ein Gestänge mit einem Drehmomentenarm verbunden ist;

Fig. 4 einen Teilquerschnitt entlang der Linie 4-4 gemäss Fig. 1, der die Verbindung des Gestänges mit dem Drehmomentenarm veranschaulicht;

Fig. 5 eine ähnliche Ansicht wie in Fig. 3, wobei ein Verbindungsbolzen den Drehmomentenarm direkt mit der Zugmittelscheibe zum Antrieb der Dreschtrommel verbindet;

Fig. 6 eine schematische Darstellung eines weiteren Ausführungsbeispiels einer Antriebsvorrichtung für die Dreschtrommel eines Mähdreschers;

Fig. 7 einen Teilquerschnitt entlang der Linie 6-6 gemäss Fig. 9, wobei das Gestänge über einen Abscherbolzen an eine Halterung lösbar angeschlossen ist;

Fig. 8 die Zugmittelscheibe mit einem Planetenträger und einer zweiten, über den Abscherbolzen festgelegten Zugmittelscheibe;

Fig. 9 eine ähnliche Ansicht wie in Fig. 6, wobei Teile der Antriebsvorrichtung weggelassen worden sind, jedoch im grösseren Massstab;

Fig. 10 eine Abscherverbindung zwischen einem Drehmomentenrad und dem zugehörigen Lenker;

Fig. 11 einen Querschnitt der Zugmittelscheibe entlang der Linie 4-4 gemäss Fig. 9 für untersetzten Antrieb der Dreschtrommel;

Fig. 12 eine ähnliche Ansicht wie in Fig. 11, wobei die Dreschtrommel direkt angetrieben wird.

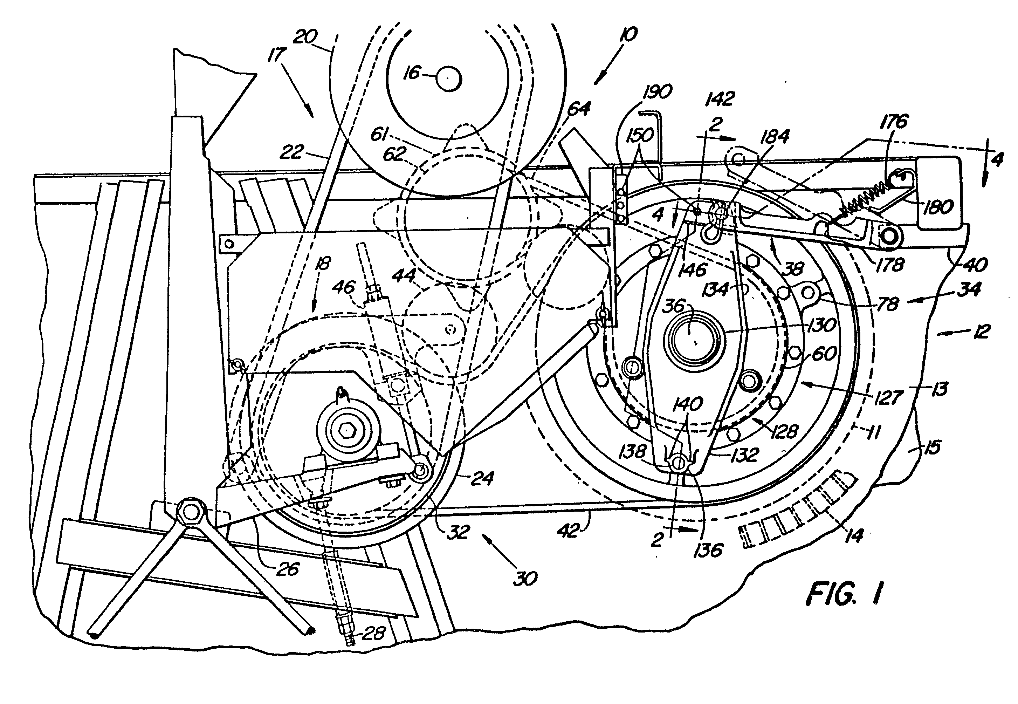

In der Zeichnung ist mit 10 ein Antriebssystem für eine Dreschtrommel 11 bezeichnet (siehe gestrichelte Linien in Fig. 1), die im Bereich des vorderen Endes des Dreschgehäuses 12 mit der zugehörigen Antriebsvorrichtung 10 aufgenommen ist. In Fig. 1 sind lediglich die Seitenwände 13 und 15 des Dreschgehäuses dargestellt. Die Dreschtrommel 11 befindet sich über einem Dreschkorb 14 und lagert zwischen den gegenüberliegenden Seitenwänden 13 und 15.

Die Antriebsvorrichtung 10 weist eine über eine in der Zeichnung nicht dargestellte Verbrennungskraftmaschine antreibbare Antriebswelle 16 auf, die über ein Zugmittelgetriebe 17 eine Antriebsvorrichtung 18 antreibt. Weitere über die Antriebswelle 16 antreibbare Zugmittelgetriebe sowie die zugehörigen Bauteile sind der Einfachheit halber nicht dargestellt. Das Zugmittelgetriebe weist eine Zugmittelscheibe 20 auf, deren wirksamer Durchmesser durch eine in der Zeichnung nicht dargestellte Verstellvorrichtung veränderbar ist. Die Zugmittelscheibe 20 des Zugmittelgetriebes 17 ist über ein Zugmittel 22 mit einer auf einem Tragarm 26 drehbar gelagerten Zugmittelscheibe 24 antriebsverbunden. Im Arbeitseinsatz ist der Achsabstand zwischen der Zugmittelscheibe 20 und der Zugmittelscheibe 24 normalerweise konstant. Die Riemenlängung kann über eine Stellvorrichtung ausgeglichen werden. Hierzu gehört ein eine Mutter aufweisendes Gestänge 28, das mit seinem oberen Ende an den Tragarm 26 angeschlossen und mit seinem unteren Ende in einer an einer Halterung angeordneten Hülse aufgenommen ist, so dass durch Drehen einer Mutter der Achsabstand zwischen den Zugmittelscheiben 20, 24 verändert werden kann, ohne die Antriebsgeschwindigkeit zu verändern.

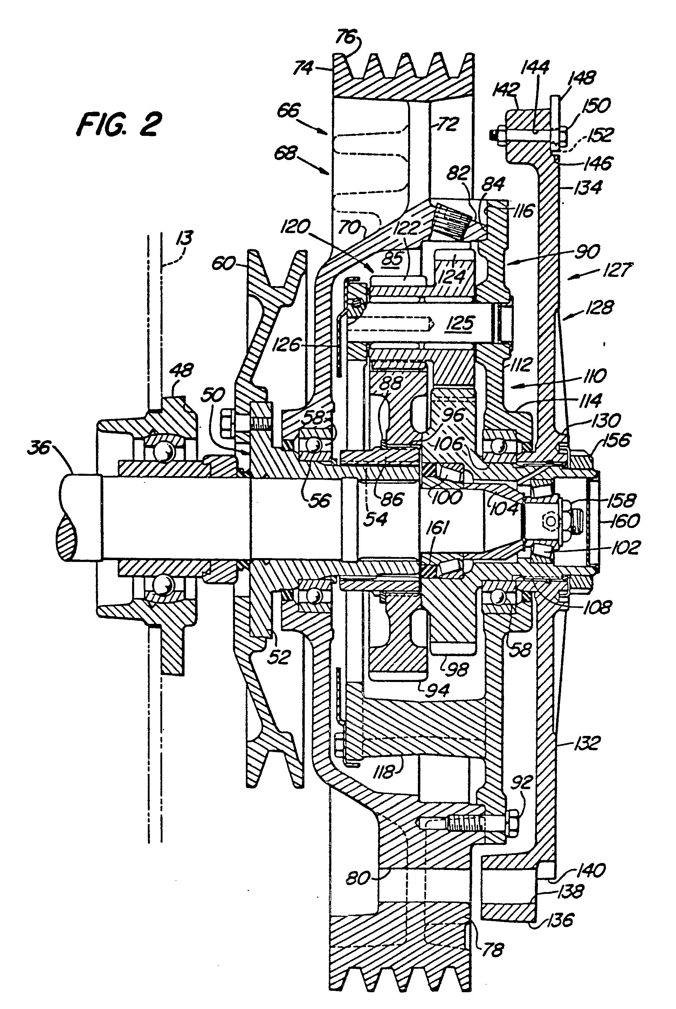

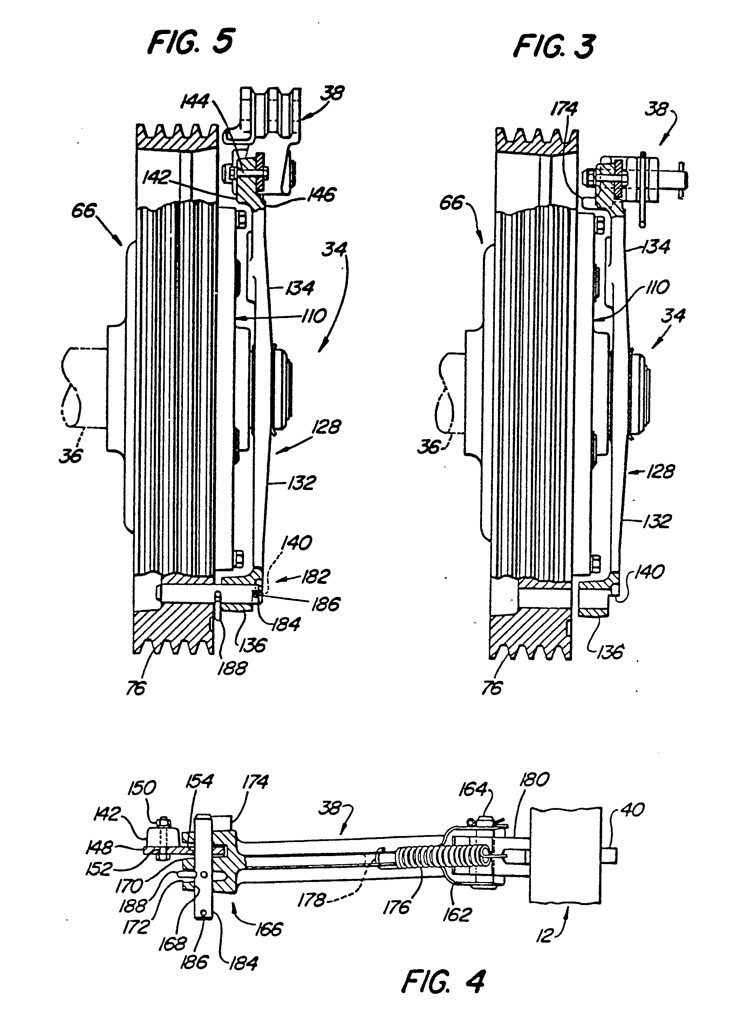

Ein stufenlos einstellbares Zugmittelgetriebe 30 für den Endantrieb der Dreschtrommel 11 weist eine Zugmittelscheibe 32 auf, die auf der gleichen Welle wie die Zugmittelscheibe 24 angeordnet ist und über diese angetrieben wird. Über das Zugmittelgetriebe 30 wird eine Endantriebsvorrichtung 34 der Dreschtrommel 11 angetrieben. Die Zugmittelscheibe 32 steht hierzu über ein Zugmittel 42 mit der Endantriebsvorrichtung 34 in Antriebsverbindung, die auf einer Welle 36 angeordnet ist, und der einGestänge 38 zugeordnet ist (Fig. 4), das mit seinem vorderen Ende an einer Halterung 40 des Dreschgehäuses 12 schwenkbar gelagert ist. Die Zugmittelspannung des Zugmittels 42 wird über eine Spannrolle 44 aufrecht erhalten, die an einem schwenkbaren Hebel angeordnet ist, der über eine Spannvorrichtung 46 verstellbar ist. Die Welle 36 lagert in Wälzlagern 48, die in den Seitenwänden 13 und 15 des Dreschgehäuses 12 aufgenommen sind (in Fig. 2 ist lediglich die rechte Seitenwand 13 dargestellt).

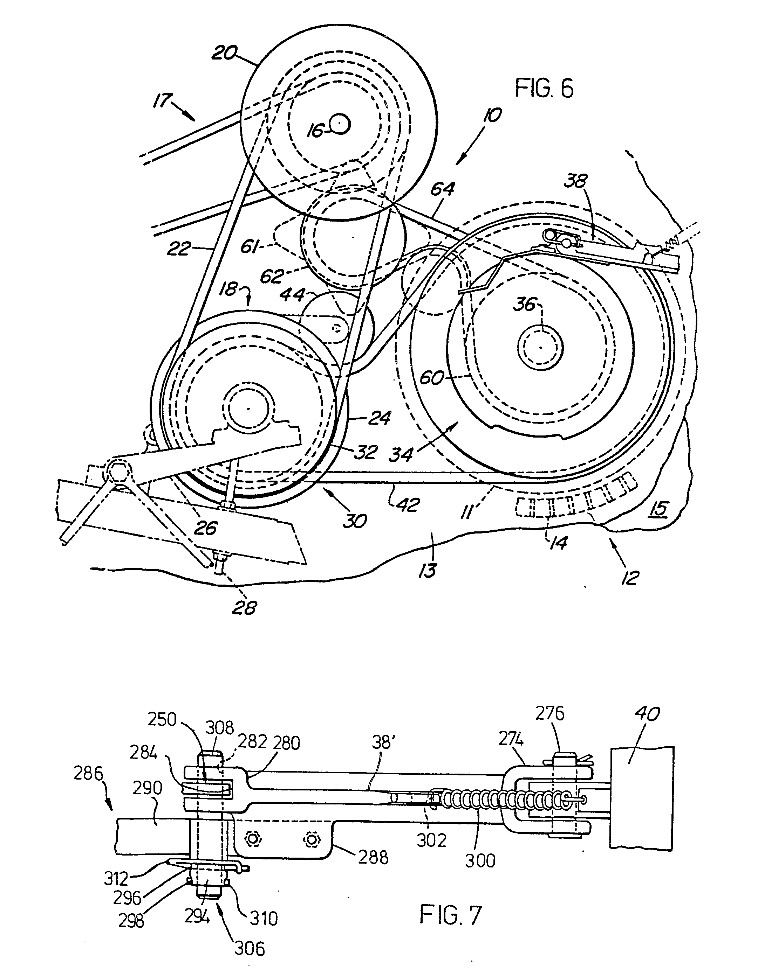

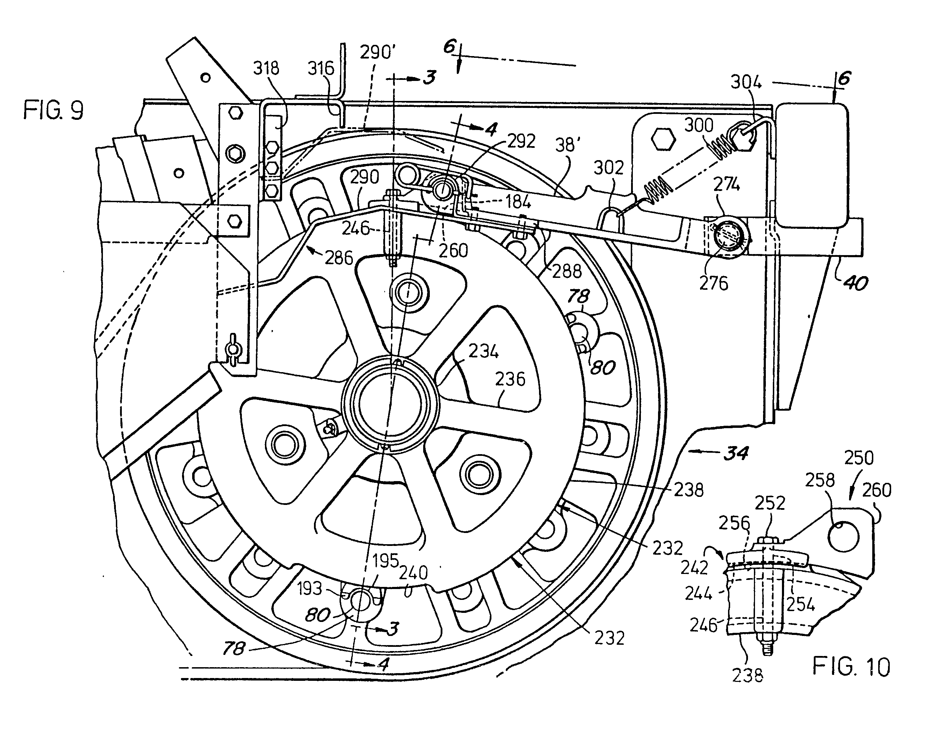

Das Drehmoment der Endantriebsvorrichtung 34 wird über eine Nabe 50, die seitlich vom Wälzlager 48 vorgesehen ist, auf die Welle 36 geleitet. Die Nabe 50 ist hierzu über eine Keilverzahnung mit der Welle 36 drehfest verbunden. Das innenliegende Ende der Nabe 50 weist einen sich radial erstreckenden Flansch 52 auf, während das aussenliegende Ende der Nabe 50 an seinem Aussenumfang eine Verzahnung 54 aufweist, die vor einem Wälzlagerring 56 eines Wälzlagers 58 endet, das auf der Nabe 50 angeordnet ist. Eine Zugmittelscheibe 60 ist am Flansch 52 der Nabe 50 mittels Schraubenbolzen konzentrisch angeschlossen und dient zum Antrieb einer Strohleittrommel 61, die in Fig. 1 und 6 in gestrichelten Linien angedeutet ist und stromabwärts vor der Dreschtrommel 11 liegt und eine Zugmittelscheibe 62 aufweist, die über ein Zugmittel 64 mit der Zugmittelscheibe 60 antriebsverbunden ist. Auf der Nabe 50 ist mittels des Wälzlagers 58 ein innenliegendes Scheibenteil 66 einer Zugmittelscheibe 68 der Endantriebsvorrichtung 34 gelagert. Der Scheibenteil 66 besteht aus einem sich radial erstreckenden Flansch mit daran anschliessender, geneigt verlaufender Wand 70, die mit einem radial verlaufenden Steg 72 verbunden ist, an dem ein Zugmittelrillen 76 aufweisender Scheibenkranz 74 angeschlossen ist. Das Zugmittel 42 bzw. der Treibriemen wird von den Zugmittelrillen 76 aufgenommen. Drei einen gleichen Abstand untereinander aufweisende Augen bzw. Angüsse 78 (Fig. 1, 9) sind an dem Steg 72 angeordnet und erstrecken sich von diesem nach aussen, wobei jeder Anguss 78 mit einer Bohrung 80 versehen ist. Die Zugmittelscheibe 68 bzw. der Scheibenteil 66 weist ferner eine konzentrisch zur Welle 36 angeordnete Ringwand 82, auf, die sich von der inneren Kante des Steges 72 nach aussen erstreckt und mit einer radial verlaufenden Stirnfläche 84 versehen ist, die rechtwinklig zur Drehachse der Zugmittelscheibe 68 verläuft und mit der Wand 70 ein Gehäuse 85 zur Aufnahme eines Getriebes beispielsweise eines Planetengetriebes 90 bildet. Zur Endantriebsvorrichtung 34 gehört ferner eine mit einer Innenverzahnung versehene Buchse 86, deren Verzahnung mit der Verzahnung 54 der Nabe 50 in Eingriff steht und die mittels eines Federringes 88 auf der Nabe 50 gesichert ist.

Die drehbaren Teile der Endantriebsvorrichtung 34 werden durch das Planetengetriebe 90 vervollständigt, das mittels eines Planetenträgers 110 und Schraubenbolzen 92 am Scheibenteil 66 angeordnet ist. Das Planetengetriebe 90 besteht aus einem Ausgangssonnenrad 94, das konzentrisch zur Welle 36 angeordnet ist und mit seiner Keilverzahnung 96 auf der ebenfalls eine Keilverzahnungen aufweisende Buchse 86 aufgezogen und mittels des Federringes 88 axial gesichert ist. Ein zweites bzw. ein Eingangssonnenrad 98 ist über ein nach aussen und ein nach innen geneigt verlaufendes Schrägrollenlager 100 und 102 auf der Welle 36 drehbar gelagert. Eine Distanzhülse 104 sichert die Schrägrollenlager 100 und 102 gegen axiale Verstellung. Das Sonnenrad 98 ist mit einer länglichen sich nach aussen erstreckenden Nabe versehen, das einen Sitz 106 aufweist und die im Bereich ihres aussenliegenden Endes eine Keilverzahnung 108 aufweist. Ein zweites Wälzlager 58 ist auf dem Sitz 106 der Nabe des Sonnenrades 98 angeordnet.

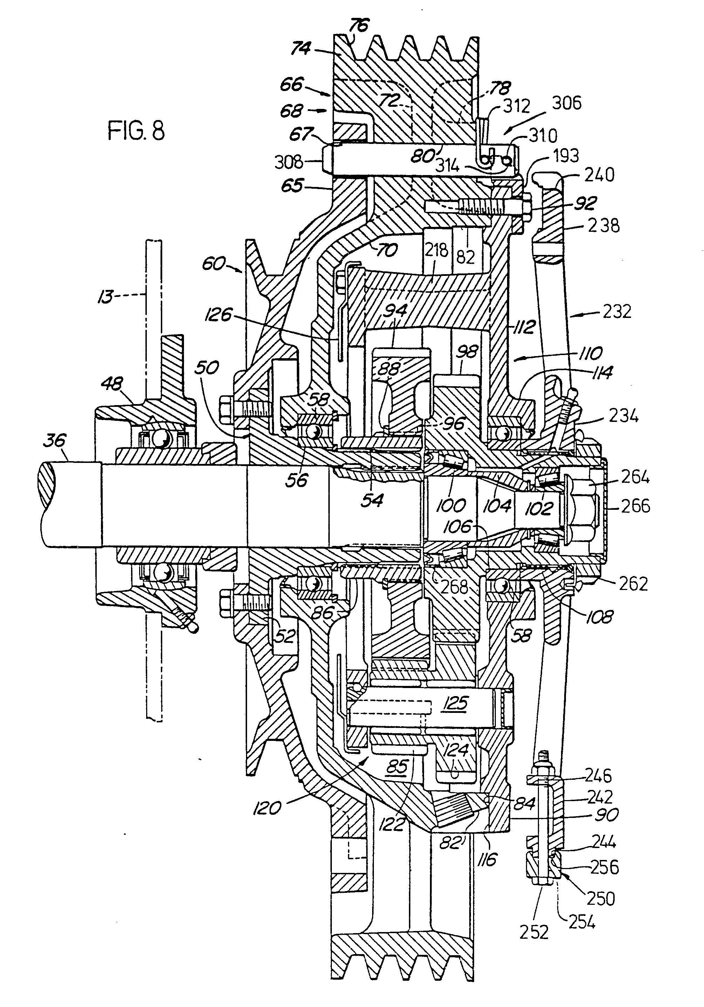

Der Planetenträger 110 weist einen Flansch 112 auf, der mittels des zweiten Wälzlagers 58 auf der Welle 36 drehbar gelagert ist. Der Flansch 112 ist mit einer eine Sackbohrung aufweisenden Nabe 114 versehen, in der das zweite Wälzlager 58 aufgenommen ist. Der Flansch 112 ist mit einer nach innen gerichteten Stirnfläche 116 versehen, die gegen die Stirnflächen 84 der Ringwand 82 der Zugmittelscheibe 68 anliegt. An den Flansch 112 ist ein Steg 118 angeschlossen, der sich von dem Flansch 112 in das Innere des Gehäuses 85 des Planetengetriebes 90 erstreckt und drei mit Abstand zueinander angeordnete Planetengetriebeteile 120 trägt, wobei in Fig. 2 und 8 lediglich ein Planetengetriebeteil dargestellt ist. Jedes Planetengetriebeteil 120 besteht aus einem ersten Planetenrad 122 an dem ein zweites Planetenrad 124 fest bzw. einteilig angeschlossen ist und das mit dem ersten bzw. Ausgangssonnenrad 94 und dem zweiten bzw. Eingangssonnenrad 98 zusammenwirkt. Die Planetenräder 122 und 124 sind auf je einer am Flansch 112 des Planetenträgers 110 angeordneten Achse 125 gelagert. Ein Ringflansch 126, der an die Stege 118 mittels Schraubenbolzen lösbar angeschlossen ist, dient zur zusätzlichen Lagerung der freien Enden der Achsen 125.

Ausserhalb des Getriebegehäuses 85 im Bereich der Nabe 114 ist auf der Nabe 50 des Eingangssonnenrades 98 eine Drehmomentenvorrichtung 127 mittels einer Keilverzahnung 108 befestigt. Die Drehmomenteneinrichtung 127 weist ein Drehmomentenkreuz 128 (Fig. 2) auf, das mit einer Nabe 130 versehen ist. Das Drehmomentenkreuz 128 besteht aus zwei diametral gegenüberliegenden Stellarmen, wobei der eine Stellarm 132 für den direkten Antrieb und der zweite Stellarm 134 zur Drehzahluntersetzung vorgesehen ist. Die äusseren Enden der Arme 132 und 134 sind einander gleich und dienen der unterschiedlichen Antriebsverbindung. Der Arm 132 weist ein Lagerauge 136 mit einer Bohrung 138 auf, deren Achse parallel zur Achse der Welle 36 verläuft und die mit einer der drei Bohrungen 80 des Scheibenteiles 66 in Übereinstimmung gebracht werden kann (Fig. 2). Im Bereich der Bohrung 138 an der aussenliegenden Seite des Lagerauges 136 befinden sich zwei gegenüberliegende Anschläge 140 (Fig. 1 und 2). Der Stellarm 134 zur Reduzierung der Geschwindigkeit weist im Bereich seines äusseren Endes ein dem Lagerauge 136 ähnliches Lagerauge 142 auf, das ebenfalls mit einer Bohrung 144 versehen ist, die parallel zur Achse der Welle 36 verläuft und mit Bezug auf die Welle 36 auf einem Radius liegt, der etwas grösser ist als der Radius, auf dem die gegenüberliegende Bohrung 138 verläuft. Das Lagerauge 142 ist mit Bezug auf die Mittellinie des Drehmomentenarmes 128 versetzt angeordnet und weist eine Schulter 146 auf, die rechtwinklig zur Achse des Armes 134 verläuft.

Ein kurzer Lenker 148 erstreckt sich von dem Drehmomentenkreuz 128 radial nach aussen und ist am Lagerauge 142 mittels eines Schraubenbolzens 150 gesichert, der durch eine im Lenker 148 vorgesehene Bohrung 152 und durch die im Lagerauge 142 vorgesehene Bohrung 144 gesteckt und mittels einer Mutter gesichert ist. Zur Bohrung 144 ist mit Abstand nach innen eine zweite Bohrung 154 im Lenker 148 vorgesehen, wobei die Bohrungen 152 und 154 auf einer Ebene verlaufen, die rechtwinklig zur Achse des Drehmomentenkreuzes 128 angeordnet sind. Die Drehmomentenvorrichtung 127 ist auf der Nabe des zweiten Sonnenrades 98 mittels einer Keilverzahnung 108 und einer Mutter 156 gesichert, während das gesamte Planetengetriebe 90 auf der Welle 36 mittels einer schmäleren Mutter 158 gesichert ist, die von einer Kappe 160 abgedeckt ist. Die Kappe 160 und eine Ringdichtung 161 dichten den Raum, in dem die Schrägrollenlager 100 und 102 vorgesehen sind, nach aussen hin ab.

Das Gestänge 38 (Fig. 1 und 4) ist in einer vertikal verlaufenden Ebene verschwenkbar, die rechtwinklig zur Achse der Welle 36 verläuft und gelenkig auf der Halterung 40 angeschlossen. Das Gestänge 38 weist hierzu eine Gabel 162 auf, die auf einem mit der Halterung 40 verbundenen Bolzen 164 schwenkbar gelagert ist. Das der Gabel 162 gegenüberliegende Ende weist eine Doppelgabel 166 auf, in der eine Bohrung 168 vorgesehen ist, deren Achse parallel zur Achse des Bolzens 164 verläuft. Die Doppelgabel 166 bildet einen inneren und äusseren Schlitz 170, 172. Ein Anschlag 174 erstreckt sich von dem Schlitz 170 nach innen unmittelbar unterhalb der Bohrung 168. Eine Zugfeder 176 ist einenends an eine Öse 178 des Gestänges 38 und an eine Anschlaghalterung 180 angeschlossen, die mit dem Dreschgehäuse 12 starr verbunden ist.

Bei der vorliegenden Erfindung wird die Drehzahl der Dreschtrommel 11 über das stufenlos einstellbare Zugmittelgetriebe 17 eingestellt, wobei zwei Drehzahlbereiche erfindungsgemäss möglich sind. Der erste Drehzahlbereich ergibt sich bei direktem Antrieb und bei Ankupplung des mit den Zugrillen 76 versehenen Teiles der Zugmittelscheibe 68 an die Welle 36 (Fig. 2). Der zweite Drehzahlbereich wird bei indirektem Antrieb über das Planetenradgetriebe 90 ermöglicht (Fig. 2 und 8).

Wird ein direkter Antrieb für die Dreschtrommel 11 gewünscht, so wird die Bohrung 138 des Drehmomentenkreuzes 128 (Fig. 2) so verstellt, dass er mit einer der Bohrungen 80 der Zugmittelscheibe 68 fluchtet, so dass ein Bolzen 182 in die Bohrung 80 und 138 eingeführt werden kann, um das Drehmomentenkreuz 128 mit der Zugmittelscheibe 68 drehfest zu verbinden (Fig. 5). Am äusseren Ende 184 (Fig. 4, 5) des Bolzens 182 ist eine Querbohrung zur Aufnahme einer Federsicherung 186 vorgesehen, während im Bereich des Schlitzes 170 der Bolzen 182 eine weitere Bohrung zur Aufnahme eines Federsplints 188 aufweist. Die beiden Bohrungen im Bolzen 182 verlaufen parallel zueinander, so dass bei einer etwaigen Drehung des Bolzens 182 die Federsicherung 186 gegen den Anschlag 140 zur Anlage kommt, so dass der Federsplint 188 seine im Schlitz vorgesehene Lage beibehält und der Bolzen 182 beim Arbeitseinsatz und der auftretenden Zentrifugalkräfte nicht aus der Bohrung herausgleitet. Bei direkter Antriebsverbindung bleibt das Gestänge 38 in seiner nach oben geschwenkten Lage, in der es sich gegen die Anschlaghalterung 180 anlegt und die Drehmomentenvorrichtung 127 freigibt, wobei die Zugfeder 176 das Gestänge 38 nach oben zieht (siehe Fig. 5). Ist das Drehmomentenkreuz 128 über den Bolzen 182 (Fig. 5) mit dem Scheibenteil 66 drehfest verbunden, so kann sich das zweite Sonnenrad 98 mit Bezug auf den Scheibenteil 66 nicht drehen, so dass der Antrieb unter Ausschaltung des Planetengetriebes 90 direkt auf die Welle 36 geleitet wird.

Bei reduzierter Ausgangsdrehzahl (Fig. 1, 3 und 4) wird der auf dem Stellarm 134 angeordnete Lenker 148 und die Gabel 166 des Gestänges 38 zusammengeführt und das eine Ende des Lenkers 148 in den Schlitz 170 geschoben, bis die Bohrungen 154 und 168 des Lenkers 148 und des Gestänges 38 untereinander fluchten. Um die beiden Teile miteinander zu kuppeln wird der Bolzen 182 in die Bohrungen 154 und 168 eingeführt und durch Einsetzen des Federsplints 188 in die Bohrung des Bolzens 182 zwischen dem Schlitz 172 gesichert. Da die beiden Bohrungen des Bolzens 182 auf der gleichen, sich durch den Bolzen 182 erstreckenden Querebene liegen, ist es leichter, den Federsplint 188 einzuführen, da die Lage der Federsicherung 186 in der Bohrung am äusseren Ende 184 des Bolzens 182 der Bedienungsperson anzeigt, wo der Federsplint 188 in die benachbarte Bohrung des Bolzens 182 eingeführt werden kann. Bei reduzierter Drehzahl der Dreschtrommel 11 sichert das Gestänge 38 das Drehmomentenkreuz 128, so dass es mit Bezug auf das Dreschgehäuse 12 keine Drehbewegung mehr ausführen kann. Hierdurch wird das zweite Sonnenrad 98 ebenfalls festgehalten und der Kraftfluss von der Zugmittelrille 76 läuft über das Reduktionsgetriebe, d.h. über das zweite Sonnenrad 98 bzw. das Eingangssonnenrad 98, das zweite Planetenrad 124, das erste Planetenrad 122 auf das Ausgangssonnenrad 94 auf die Welle 36. Das Drehmomentenkreuz 128 bildet ein wirksames Übertragungselement, zumal die Lageraugen 136 und 142 direkt neben der Stirnfläche des Scheibenkranzes 74 mit den Zugmittelrillen 76 liegen, so dass die Tangentialkräfte relativ klein gehalten werden können, da der Radialabstand zur Welle 36 klein ist, so dass dadurch relativ kleine Bauteile zur Drehmomentenübertragung verwendet werden können.

Bei reduziertem Antrieb der Dreschtrommel 11 ist das Drehmoment, das auf die treibenden Teile übertagen wird (Welle 36, Dreschtrommel 11), bei einer bestimmten Eingangsleistung grösser, wobei jedoch die Zugmittel 22 und 42 so ausgebildet sind, dass sie das überhöhte Drehmoment übertragen können, so dass eine Überlast an der Welle 36 bzw. an der Dreschtrommel 11 auftreten kann. Die Scherverbindung mittels des Schraubenbolzens 150 zum Anschluss des Lenkers 148 an das Lagerauge 142 des Drehmomentenkreuzes 128 ist so ausgelegt, dass bei einer bestimmten Grösse des Drehmomentes der Abscherbolzen, der durch den Schraubenbolzen 150 dargestellt wird, abscheren kann, so dass keine Beschädigung am Getriebe bzw. an den Arbeitsorganen auftreten kann. Beim Abscheren des Abscherbolzens 150 kann das Drehmomentenkreuz 128 frei drehen, wobei beim Abschervorgang das Gestänge 38 mittels der Feder 76 sofort nach oben gezogen wird, so dass das Drehmomentenkreuz 128 ungestört drehen kann, ohne dass es mit dem Gestänge 38 kollidiert.

Eine Abscherung des Abscherbolzens 150 tritt beispielsweise dann auf, wenn die Dreschtrommel 11 übermässig stark mit Erntegut beschickt wird. Tritt also eine Überlast auf, so kann eine Korrektur der Überlast nach Abscheren des Abscherbolzens 150 vorgenommen werden und dann ein neuer Abscherbolzen wieder eingesetzt werden, so dass die Arbeit des Mähdreschers fortgesetzt werden kann. Hierzu ist es der Einfachheit halber möglich, zusätzliche Schraubenbolzen 150 in einer Halterung 190 (Fig. 1) vorzusehen, die am Dreschgehäuse 12 im Bereich des oberen Endes des Drehmomentenkreuzes 128 angeordnet ist.

Um also einen direkten oder indirekten Antrieb für die Dreschtrommel 11 zu ermöglichen, kann auf einfache Weise die gewünschte Verbindung zwischen dem Drehmomentenkreuz 128 und der Zugmittelscheibe 68 bzw. zwischen dem Drehmomentenkreuz und dem Gestänge 38 hergestellt werden. Ferner sind das Gestänge 38 sowie das Drehmomentenkreuz 128 so ausgebildet, dass eine Fehlkupplung durch falsches Zusammenschliessen der einzelnen Teile ausgeschaltet ist. Beispielsweise wird der Versuch, das Gestänge 38 an die getriebene Zugmittelscheibe 68 anzuschliessen, durch den Anschlag 174 verhindert, der sich gegen die Schulter des Flanches 112 anlegt. Hierdurch wird verhindert, dass die Bohrung 168 zur Bohrung 80 des Lagerauges 78 ausgerichtet wird (Fig. 3). Ferner liegt die Bohrung 80 der Zugmittelscheibe 68 auf einem kleineren Durchmesser als die Bohrung 154 des Lenkers 148. Somit ist es nicht möglich, das Gestänges 38 und den Lenker 148 mit der Zugmittelscheibe 68 zu verbinden, da ein versehentliches Einführen des Bolzens 182 in die Bohrung 168 des Gestänges 38, ein Einführen in die Bohrung 80 des Zugmittelscheibe 68 nach Ausrichten der Zugmittelscheibe 68 nicht gestattet.

Die kompakte Bauweise der Dreschtrommel 11 und der zugehörigen Antriebskomponenten geht insbesondere aus der Darstellung gemäss Fig. 2 hervor. Die Zugmittelscheibe 60 und die Zugmittelscheibe 68 mit den Zugmittelrillen 76 sind dicht an der Aussenseite der Wand 13 des Dreschgehäuses 12 vorgesehen und die Getriebeteile des Planetenradgetriebes 90 liegen innerhalb der Gesamtbreite der Zugmittelscheibe 68 und sind in dieser integriert. Das Drehmomentkreuz 128 verbreitert nur geringfügig die Gesamtbreite des Mähdreschers bzw. der Antriebsvorrichtung ausserhalb der Wand 13 des Mähdreschers. Die einfache Handhabung mit der Möglichkeit des Wechsels zwischen direktem und indirektem Antrieb für die Dreschtrommel 11 ergibt sich ohne weiteres aus den Zeichnungen. Ferner kann nur ein unterschiedlich kuppelbarer Bolzen 182 für beide Antriebsarten verwendet werden. Die Möglichkeit der Unterbringung von Ersatzabscherbolzen 150, die den Verlust solcher Ersatzabscherbolzen ausschaltet, stellt eine vorteilhafte Massnahme dar. Der Bolzen 182 kann ohne Arbeitswerkzeuge relativ leicht in die Bohrungen der Zugmittelscheibe 68, des Gestänges 38 und des Lenkers 148 eingesetzt werden, so dass ein schneller Wechsel von der einen Antriebsart auf die andere Antriebsart möglich ist. Da drei mit Abstand zueinander angeordnete Bohrungen 80 in der Zugmittelscheibe 68 vorgesehen sind, wird die Umstellung für die direkte Antriebsart noch weiterhin vereinfacht. Ein Verschleiss der in Eingriff stehenden gegeneinander nicht drehenden Zahnräder ist bei dieser Antriebsart gering, wenn zur Sperrung des Planetengetriebes 90 drei verschiedene Anschlussbohrungen 80 an der Zugmittelscheibe 68 zur Verfügung stehen. Der Ein- und Ausbau sowie der Service an der Endantriebsvorrichtung 34 ist leicht und schnell durchzuführen. Durch Entfernen der Kappe 160 und der Mutter 158 und der Schraubenbolzen 92, kann des gesamte Planetengetriebe 90 von der Welle 36 abgezogen werden und damit ein leichter Zugang ins Innere des Gehäuse 85 und zu den einzelnen Getriebeteilen ermöglicht werden, ohne dass der relativ schwere aussenliegende Scheibenteil 66 von der Welle 36 abgenommen zu werden braucht. Jedoch wirkt bei grösseren Wartungsarbeiten der Abbau der gesamten Endantriebsvorrichtung 34 als Baueinheit.

Die in Fig. 8 dargestellten Zugmittelscheiben 60 und 68 unterscheiden sich nur geringfügig von den Zugmittelscheiben 60 und 68 gemäss Fig. 2. Die Zugmittelscheibe 60 kann gemäss Fig. 8 über einen Bolzen 308 mit der angrenzenden Zugmittelscheibe 68 antriebsverbunden werden. Die Schraubenbolzen 92 (Fig. 8) zur Sicherung des Flansches 112 am Scheibenteil 66 weisen zusätzliche Schraubenbolzensicherungselemente 193 (Fig. 9) mit je einer Aussparung 195 auf, die mit der Bohrung 80 zur Aufnahme des Schraubenbolzens 308 fluchtet.

Anstelle des in Fig. 2 dargestellten Drehmomentenkreuzes 128 ist in den Fig. 8, 9 ein Drehmomentenrad 232 vorgesehen, dass ein Nabenteil 234 aufweist, das über Arme 236 mit einem Ringrad 238 (Fig. 9) verbunden ist. Das Ringrad 238 weist eine relativ flache Aussparung 240 und diametral gegenüber einen Scherbolzenanschlussteil 242 (Fig. 10) auf. Am Scherbolzenanschlussteil 242 ist, wie aus Fig. 8 und 10 zu entnehmen ist, eine sich radial erstreckende Rippe 244 vorgesehen, die konzentrisch zum Drehmomentenrad 232 verläuft. Im Scherbolzenanschlussteil 242 ist eine sich radial erstreckende Bohrung 246 vorgesehen, die mittig durch die Rippe 244 verläuft.

Im normalen Arbeitseinsatz ist eine Anschlussöse 250 an die Rippe 244 des Scherbolzenanschlussteiles 242 mittels eines Schraubenbolzens 252 angeschlossen, der sich durch eine Bohrung 254 in der Anschlussöse 250 und durch eine Bohrung 246 des Drehmomentenrades 232 erstreckt. Die Anschlussöse 250 weist eine kreisbogenförmige Oberfläche 246 auf, die gegen die Rippe 244 anliegt (Fig. 10). In der Anschlussöse 256 ist ferner eine Bohrung 258 vorgesehen, die rechtwinklig zur Rippe 244 verläuft. An der Anschlussöse 250 ist ferner mit Abstand zur Bohrung 258 eine Tragkante 260 (Fig. 10) vorgesehen.

Das Drehmomentenrad 232 ist über eine Keilverzahnung 108 und mittels einer Mutter 262 auf der Nabe des Sonnenrades 98 des Planetengetriebes 90 befestigt. Das gesamte Planetengetriebe 90 ist auf die Welle 36 mittels einer kleineren Mutter 264 gesichert die mittels einer Kappe 266 abgedeckt ist. Die Kappe 266 bildet mit einer Dichtung 268 seitlich des Schrägrollenlagers 100 eine Schmiermittelkammer für das zweite Sonnenrad 98.

Das Gestänge 38' besteht aus einem T-Profil (Fig. 7 und 9), an dem endseitig je eine Gabel 274, 280 vorgesehen ist. Das Gestänge 38' ist in einer vertikal verlaufenden Ebene verschwenkbar, die rechtwinklig zur Welle 36 verläuft. Das Gestänge 38' ist über die Gabel 274 und einen Bolzen 276 an die Halterung 40 schwenkbar angeschlossen. An dem der Gabel 274 gegenüberliegenden Ende des Gestänges 38' ist die Gabel 280 mit einer Bohrung 282 vorgesehen, die parallel zur durch den Bolzen 276 verlaufenden Schwenkachse verläuft. Der die beiden Gabelteile miteinander verbindende Steg, der Gabel 280 weist eine geneigt verlaufende, bearbeitete Oberfläche 284 auf.

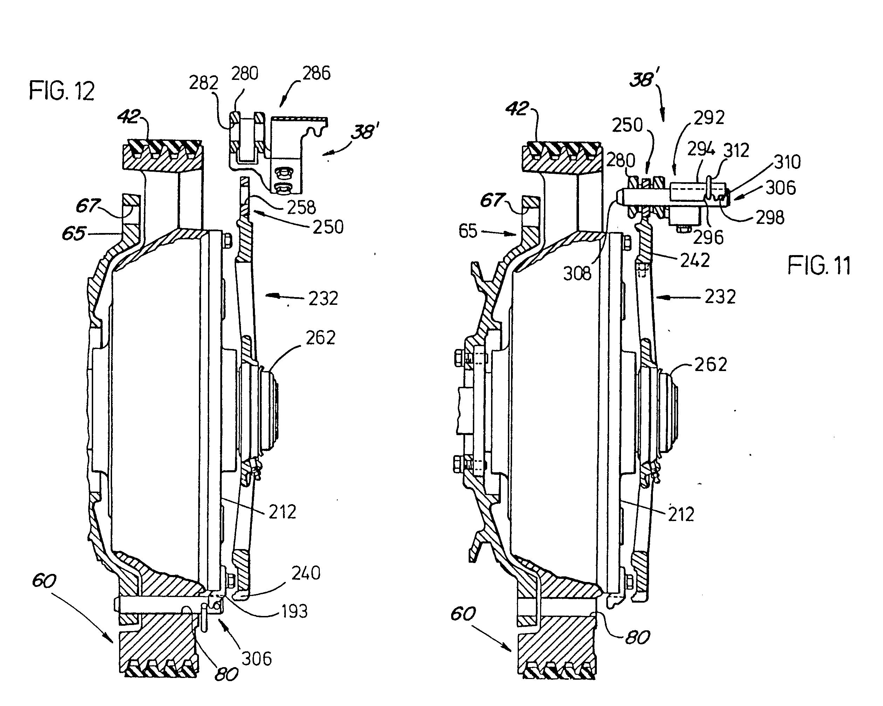

Seitlich des Gestänges 38' erstreckt sich eine über das Ende der Gabel 280 reichende Befestigungsvorrichtung 286 die als Hebel ausgebildet ist und die, mittels Schraubenbolzen an eine am Gestänge 38' vorgesehene Lasche 288 angeschlossen ist. Die Befestigungsvorrichtung 286 weist ein Arretierungsteil 290 auf, dessen freies Ende nach unten hakenförmig abgehoben ist (siehe Fig. 9). An die Lasche 288 ist ferner ein hakenförmiges Befestigungselement 292 angeschlossen, das an seinem freien Ende einen halbkreisförmigen Hakenteil 294 aufweist (Fig. 11), der koaxial zur Bohrung 282 des Gestänges 38' verläuft. Das Hakenteil 294 weist zwei innenliegende Rillen 296 und eine aussenliegende Rille 298 auf. Eine Zugfeder 300 ist einenends an eine am Gestänge 38' vorgesehene Öse 302 und anderenends an eine an der Halterung 40 vorgesehen Lasche 304 angeschlossen.

Die in Fig. 11 dargestellte Zugmittelscheibe 68 ist auf untersetzten Antrieb und die in Fig. 12 dargestellte gleiche Zugmittelscheibe 68 auf direkten Antrieb eingestellt. Der direkte Antrieb zum Antrieb der Welle 36 wird dadurch ermöglicht, dass das Drehmomentenrad 232 mit einer Bohrung 80 im Lagerauge 78 soweit gedreht wird, bis die Bohrung 80 mit einer Bohrung 67 der Zugmittelscheibe 65 zum Antrieb einer Schlagtrommel fluchtet. Die untereinander fluchtenden Bohrungen 67 und 80 (Fig. 11, 12) liegen auf dem gleichen Radius wie die Aussparung 240 des Ringrades 238 (Fig. 9). Der Scheibenteil 66 wird dann an die Zugmittelscheibe 65 mittels einer Steckverbindung 306 angekuppelt. Die Steckverbindung 306 weist einen Bolzen 308 mit einer Splintfeder 310 auf, die in eine entsprechende Querbohrung im Bolzen 308 eingeführt ist. Die Steckverbindung ist mittels einer Klammersicherung 312 gesichert. Die in dem Bolzen 308 vorgesehenen Querbohrungen sind so aufeinander abgestimmt, dass eine Drehung des Bolzens 308 durch Anlage der Splintfeder 310 gegen eine Schulter 314 (Fig. 8) des Schraubenbolzensicherungselementes 193 begrenzt wird. Somit hält die Klammersicherung 312 ihre Lage und verhindert dadurch ein Herausgleiten des Bolzens 308 aus der Bohrung 80 in Folge zentrifugaler Kräfte, die beim Arbeitseinsatz auftreten können.

Bei direktem Antrieb wird das Gestänge 38' mit dem Arretierungsteil 290 in eine obere Stellung (siehe Fig. 9, gestrichelter Arretierungsteil 290') verstellt, wobei die Feder 300 den Arretierungsteil gegen einen Anschlag 316 zieht, der am Dreschgehäuse 12 angeordnet ist, und dadurch das Drehmomentenrad 232 freigibt. Gemäss Fig. 12 ist die Zugmittelscheibe 60 mit der Zugmittelscheibe 65 fest verbunden, die auf der Welle 36 (Fig. 8) drehfest angeordnet ist, so dass der direkte Antrieb von den Zugmittelrillen 76 der Zugmittelscheibe 68 auf die Welle 36 geleitet wird, wobei der Kraftfluss nicht über das in der Zugmittelscheibe 68 vorgesehene Planetengetriebe 90 läuft. Das Gleichgewicht bzw. ein Auswuchten des Planetengetriebes 90 bei direktem Antrieb wird durch die entsprechende Dimensionierung der Aussparung 240 und die vorteilhafte Lage der gegenüberliegenden Steckbolzenverbindung 306 erreicht. Die Steckbolzenverbindung 306 kann mit Bezug auf die Aussparung 240 nur um 180° versetzt am Drehmomentenrad 232 vorgesehen werden. Bei direktem Antrieb wird die Steckbolzenverbindung im Bereich der Aussparung 240 montiert so dass eine gute Auswuchtung für die drehenden Teile bei direktem Antrieb gewährleistet ist (Fig. 12).

Bei untersetztem Antrieb (Fig. 7, 9 und 11) wird die Gabel 280 des Lenkers 38' an die am Drehmomentenrad 232 vorgesehen Anschlussöse 250 herangeschwenkt, wobei die Anschlussöse 250 in die Gabel 280 hineingeführt wird, so dass die Bohrungen 258 und 282 der Anschlussöse 250 und der Gabel 280 untereinander fluchten. Um die Anschlussöse 250 und die Gabel 280 fest miteinander zu verbinden, braucht lediglich der Bolzen 308 in die Bohrungen eingeführt zu werden, um dann mittels der Klammersicherung 312 festgesetzt zu werden, die in die Rille 296 des Befestigungselementes 292 und in die Querbohrung des Bolzens 308 eingesetzt wird.

Da bei direktem und indirektem Antrieb die beiden Bohrungen in dem Bolzen 308 auf der gleichen Querebene liegen, ist es leichter, die Klammersicherung 312 einzusetzten, da die Stellung der Splintfeder 310 im Bolzen 308 anzeigt, wo die Klammersicherung 312 eingesetzt werden muss. Ferner ist die Splintfeder 310 durch Anlage an die Schulter 314 an dem Schraubenbolzensicherungselement 193 fixiert (Fig. 8 direkter Antrieb). Die Rille 298 des Hakenteiles 294 des Befestigungselementes 292 (Fig. 11 untersetzter Antrieb) dient als Führung zur Ausrichtung der Bohrung, in der die Klammersicherung 312 eingeführt werden muss.

Bei direktem Antrieb sichert das Gestänge 38' das Drehmomentenrad 232 drehfest am Dreschgehäuse 12, so dass das zweite Sonnenrad 98 ebenfalls festgehalten wird und der Kraftfluss von den Zugmittelrillen 76 über das Planetengetriebe 90, d.h. über das zweite Eingangssonnenrad 98, das Planetenrad 124, das Planetenrad 122 auf das Ausgangssonnenrad 94 und somit auf die Welle 36 geleitet wird.

Das Drehmomentenrad 232 bildet ein wirksames Übertragungselement, wobei an der Eingangsstelle (Anschlussstelle, Anschlussöse 250, dicht neben der Aussenoberfläche der Zugmittelrillen 76) die tangentialen Kräfte relativ klein sind, da auch der radiale Abstand zur Achse der Welle klein ist. Durch diese Anordnung kann mit relativ leicht dimensionierten Bauteilen ausgekommen werden.

Bei untersetztem Antrieb steigt das Drehmoment, das auf die drehbaren Teile übertragen wird (Welle 36 und Dreschtrommel 11) bei einer bestimmten Eingangsleistung natürlich an. Die Zugmittel 22, 24 sind jedoch so ausgelegt, dass das bei Überlast auftretende Drehmoment übertragen werden kann. Die Scherverbindung bzw. das Kupplungselement (Abscherbolzen 252 zum Anschluss der Anschlussöse 250 am Drehmomentenrad 232) ist so dimensioniert, dass bei einem bestimmten Drehmoment ein Abscheren erfolgt, so dass die Welle 36 sowie die Dreschtrommel 11 bzw. andere Komponenten nicht beschädigt werden. Nach dem Abschervorgang kann das Drehmomentenrad 232 frei drehen, wobei das Gestänge 38' sofort über die Zugfeder 300 gegen den Anschlag 316 (Fig. 9) gezogen wird, so dass das Drehmomentenrad 232 nicht mit diesen Teilen in Berührung kommt. Die Anschlussöse 250 bleibt nach diesem Abschervorgang an dem Gestänge 38' angeschlossen, wobei durch Anlage der Tragkante 260 an der Oberfläche 284 die Anschlussöse 250 nicht nach unten schwenkt, so dass die Anschlussöse 250 keinen Kontakt mehr mit dem Ringrad 238 bekommt. Durch die kreisförmige Oberfläche des Ringrades 238 und die konzentrische Ausbildung der Rippe 244 mit einem Radius der etwas grösser ist als der Radius des Ringrades 234 in Verbindung mit glatten Kontaktflächen zwischen den beiden Teilen wird somit eine hindernisfreie Aussenkontur an den beiden Teilen geschaffen, so dass bei einem unbeabsichtigten Kontakt zwischen dem Lenker 38' und dem Drehmomentenrad 232 keine Beschädigungen auftreten.

Ein Abscheren des Abscherbolzens 252 kann infolge einer Überlast durch übermässige Erntegutzufuhr zur Dreschtrommel 11 auftreten. Tritt beispielsweise eine Überlast auf und schert dabei ein Schraubenbolzen ab, so lässt dieser sich ohne weiteres wieder ersetzen und die Arbeit kann mit dem Mähdrescher fortgesetzt werden. Hierzu können entsprechende Abscherbolzen an einer Halterung 318 vorgesehen werden (Fig. 9), die am Dreschgehäuse 12 in der Nähe der Scherverbindung vorgesehen ist.

Die einzelnen Elemente sind so bemessen, dass ein Umrüsten von einer Betriebsart auf eine andere Betriebsart ohne weiteres möglich ist, ohne dass die Teile falsch miteinander gekuppelt werden. Somit ist ein unbeabsichtigtes Ankuppeln des Gestänges 38' an die getriebene Scheibe durch die Gabel 280 bei Anlage des Gestänges 38' auf dem Ringrad 238 des Drehmomentenrades 232 ausgeschlossen, da die Bohrung 282 der Gabel 280 nicht der Bohrung 80 des Scheibenteiles 66 fluchtend ausgerichtet werden kann (Fig. 11 und 12). Ferner liegt der Radius der Bohrung 80 des Scheibenteiles 66 auf einem kleineren Radius als die Bohrung 258 der Anschlussöse 250. Auf diese Weise wird ausgeschaltet, dass beim Anschluss des Gestänges 38' an die Anschlussöse 250 der Bolzen 308 nicht versehentlich so weit in die Bohrung 282 eingeführt werden kann, dass er auch in die Bohrung 80 des Scheibenteiles 60 eintritt.

Die Zugmittelscheibe 60 mit den zugehörigen Zugmittelrillen 76 ist relativ dicht an der Seitenwand 13 des Mähdreschers angeordnet. Die einzelnen Getriebeteile des Planetengetriebes 90 sowie der Flansch der Zugmittelscheibe 65 liegen innerhalb der axialen Ausdehnung des Scheibenkranzes 74 des Zugmittelscheibe 68. Das Drehmomentenrad 232 nimmt relativ wenig Platz ausserhalb der Seitenwand 13 sowie seitlich der Zugmittelscheibe 68 ein. Die Steckverbindung 306 kann für beide Antriebsarten eingesetzt werden, so dass keine zusätzliche Unterbringung der Steckverbindung erforderlich ist und somit keine Teile ohne weiteres verloren werden können. Der Bolzen 308 kann ohne weiteres in die Bohrungen 67, 80 der Zugmittelscheibe 68 und des Flansches der zusätzlichen Zugmittelscheibe 65, der Anschlussöse 250 und in die Bohrung des zugehörigen Lenkers 38' eingesetzt werden, wobei zum Umrüsten auf eine andere Antriebsart keine Arbeitswerkzeuge erforderlich sind. Durch die Verwendung von drei mit Abstand zueinander angeordneten Bohrungen 80 in der Zugmittelscheibe 68 ist das Umrüsten für direkten Antrieb relativ leicht möglich. Ferner kann bei direktem Antrieb das Planetengetriebe 90 geschont werden, da der Kraftfluss bei direktem Antrieb nicht über das Planetengetriebe läuft.

Der Ein- und Ausbau sowie die Wartung der Endantriebsvorrichtung 34 ist relativ leicht durchzuführen. Durch die Entfernung der Schraubenbolzen 92 der Kappe 266 und der Mutter 264 kann das gesamte Planetengetriebe 90 ohne weiteres von der Welle 36 abgezogen werden, so dass relativ leicht an das Gehäuse 85 der Zugmittelscheibe 68 herangekommen werden kann. Der Ein- und Ausbau des Planetengetriebes 90 ist ohne Abbau der relativ schweren Zugmittelscheibe 68 möglich. Der gesamte Endantrieb 34 kann ausserdem als Baugruppe an und abgebaut werden, wenn dies aus Reparaturgründen notwendig ist.

**Patentansprüche**

1. Antriebsvorrichtung für eine landwirtschaftlich nutzbare Maschine mit einem mindestens zwei Drehzahlbereiche aufweisenden Getriebe, insbesondere Planetengetriebe (90), das innerhalb einer Aussparung einer Zugmittelscheibe (68) integriert ist, der ein Kupplungselement, z.B. ein Drehmomentkreuz (128) oder ein Drehmomentenrad (232), zugeordnet ist, das zur Getriebeschaltung auf einer Welle (36) des Getriebes (90) drehbar gelagert ist und einmal ein Eingangsteil, z.B. ein Eingangssonnenrad (98), des Getriebes (90) am Gehäuse (12) der Maschine und zum anderen an der Zugmittelscheibe (68) festlegt, dadurch gekennzeichnet, dass zwischen dem Kupplungselement (128, 232) und dem Gehäuse (12) ein als Überlastsicherung ausgebildeter Lenker (148, 250) vorgesehen ist, der über einen Abscherbolzen (150, 252) an das Kupplungselement (128, 232) oder an das Gehäuse angeschlossen ist.

2. Antriebsvorrichtung nach Anspruch 1, dadurch gekennzeichnet, dass das Kupplungselement als Drehmomentenkreuz (128) ausgebildet ist, das auf der Welle (36) drehbar und feststellbar gelagert und mit dem Eingangsteil (98) fest verbunden ist.

3. Antriebsvorrichtung nach Anspruch 1, dadurch gekennzeichnet, dass der Lenker (148) der Überlastsicherung einenends an einen Stellarm (134) des Drehmomentenkreuzes (128) und anderenends mittel- oder unmittelbar an einen Rahmen bzw. an das Gehäuse (12) der Maschine gelenkig angeschlossen ist.

4. Antriebsvorrichtung nach Anspruch 1 und 3, dadurch gekennzeichnet, dass der Lenker (148) der Überlastsicherung an ein am Rahmen der Maschine schwenkbar gelagertes Gestänge (38) gelenkig angeschlossen ist, das nach Lösen vom Lenker (148) über eine Feder (176) in eine die Drehbewegung des Drehmomentenkreuzes (128) nicht behindernde Stellung selbsttätig verschwenkbar ist.

5. Antriebsvorrichtung zum Antrieb einer in einem Mähdrescher vorgesehenen Dreschtrommel (11), die auf der sich durch das Planetengetriebe (90) erstreckenden Welle (36) gelagert ist, nach Anspruch 1, dadurch gekennzeichnet, dass das Planetengetriebe (90) in einem Gehäuse (85) angeordnet ist, das Bestandteil der Zugmittelscheibe (68) ist, wobei die sich in Achsrichtung der Welle (36) erstreckende Breite des Planetengetriebes (90) in etwa der Gesamtbreite der Zugmittelscheibe (68) entspricht, die dicht an einer Seitenwand (13) des Gehäuses (12) des Mähdreschers angeordnet ist.

6. Antriebsvorrichtung nach einem oder mehreren der vorherigen Ansprüche, dadurch gekennzeichnet, dass das Planetengetriebe (90) aus einem auf der Welle (36) drehfest gelagerten ersten Sonnenrad (94) und einem zweiten auf der Welle (36) drehbar gelagerten und mit dem Drehmomentenkreuz (128) fest verbundenen Sonnenrad (98) sowie einem Doppelplanetenrad (122, 124) gebildet ist, das über einen Planetenträger (110) an die Aussenseite der Zugmittelscheibe (68) angeschlossen ist, wobei das erste Sonnenrad (94) grösser als das zweite Sonnenrad (98) ist, so dass bei zugeschaltetem Planetengetriebe für indirekten Antrieb die Drehzahl der Welle (36) kleiner ist als die Drehzahl der Zugmittelscheibe (68).

7. Antriebsvorrichtung nach einem oder mehreren der vorherigen Ansprüche, dadurch gekennzeichnet, dass das in der Zugmittelscheibe (68) integrierte Gehäuse (85) aus einem Scheibenkranz (74), einer mit Bezug auf die Seitenwand (13) des Mähdreschers innenliegenden Seitenwand und einer aussenliegenden Seitenwand gebildet ist, wobei die aussenliegende Seitenwand als Planetenträger (110) ausgebildet ist, der über Schraubenbolzen (92) lösbar mit der Zugmittelscheibe (68) verbunden ist.

8. Antriebsvorrichtung nach Anspruch 7, dadurch gekennzeichnet, dass in einer jeden Seitenwand des Gehäuses (85) zur Aufnahme des Planetengetriebes (90) ein koaxial zur Welle (36) angeordnetes Wälzlager (58) zur drehbaren Aufnahme der Zugmittelscheibe (68) vorgesehen ist.

9. Antriebsvorrichtung nach einem oder mehreren der vorherigen Ansprüche, dadurch gekennzeichnet, dass das zweite Sonnenrad (98) eine sich axial erstreckende Nabe zur Aufnahme des in der aussenliegenden Seitenwand angeordneten Wälzlagers (58) aufweist.

10. Antriebsvorrichtung nach Anspruch 9, dadurch gekennzeichnet, dass auf der Nabe des zweiten Sonnenrades (98) das Drehmomentenkreuz (128) drehfest angeordnet ist.

11. Antriebsvorrichtung nach einem oder mehreren der vorherigen Ansprüche, dadurch gekennzeichnet, dass ein Stellarm (132) des Drehmomentenkreuzes (128) über ein lösbares Verbindungselement, z.B. einen Bolzen (182), an die Zugmittelscheibe (68) wahlweise anschliessbar ist, das in eine am Stellarm (132) vorgesehene Aussparung (138) und in eine zu dieser ausrichtbare Aussparung (80) an der Zugmittelscheibe (68) einsetzbar ist.

12. Antriebsvorrichtung nach Anspruch 1, dadurch gekennzeichnet, dass das Kupplungselement aus einem Drehmomentenkreuz (128) mit zwei sich radial erstreckenden Stellarmen (132, 134) besteht, wobei der eine Aussparung (138) aufweisende Arm (132) wahlweise an die Zugmittelscheibe (68) und der andere Arm (134) über den Abscherbolzen (150) wahlweise an das Gehäuse (12) eines Mähdreschers anschliessbar ist, wobei die Anschlussstellen der Arme auf unterschiedlich grossen Radien liegen.

13. Antriebsvorrichtung nach einem oder mehreren der vorherigen Ansprüche, dadurch gekennzeichnet, dass das Drehmomentenkreuz (128) dicht an der Aussenseite der Zugmittelscheibe (68) angeordnet ist.

14. Antriebsvorrichtung nach einem oder mehreren der vorherigen Ansprüche, dadurch gekennzeichnet, dass die Zugmittelscheibe (68) zwei parallel zueinander verlaufende Stirnflächen aufweist, die untereinander einen Abstand aufweisen, der grösser ist als die Gesamtbreite des Planetengetriebes (90).

15. Antriebsvorrichtung nach Anspruch 1, dadurch gekennzeichnet, dass die antreibbare Zugmittelscheibe (68) einen Scheibenteil (66) aufweist, auf den der Antrieb eingeleitet wird und der für eine erste Antriebsgeschwindigkeit wahlweise mit der Welle (36) drehfest verbindbar ist, wobei das Eingangssonnenrad (98) des Planetengetriebes (90) für eine zweite Antriebsgeschwindigkeit wahlweise mit einem Dreschgehäuse (12) mittel- oder unmittelbar drehfest verbindbar ist.

16. Antriebsvorrichtung nach einem oder mehreren der vorherigen Ansprüche, dadurch gekennzeichnet, dass neben der antreibbaren Zugmittelscheibe (68) eine zweite Zugmittelscheibe (60, 65) auf der Welle (36) angeordnet und mit dieser drehfest verbunden ist, wobei die erste Zugmittelscheibe (68) über ein Verbindungselement, z.B. eine Steckverbindung (306), wahlweise an die drehfeste Zugmittelscheibe (60) anschliessbar ist oder das mit dem Eingangssonnenrad (98) drehfest verbundene Drehmomentenrad (232) über das gleiche Verbindungselement wahlweise mit einem Dreschgehäuse (12) mittel- oder unmittelbar verbindbar ist.

17. Antriebsvorrichtung nach einem oder mehreren der vorherigen Ansprüche, dadurch gekennzeichnet, dass die drehfeste Zugmittelscheibe (60, 65) einen Flansch aufweist, der innerhalb einer axialen Ausdrehung des Scheibenteils (66), auf den der Antrieb eingeleitet wird, liegt.

18. Antriebsvorrichtung nach Anspruch 16, dadurch gekennzeichnet, dass das Verbindungselement (306) mindestens einen Bolzen (308) aufweist, der in eine im Flansch der drehfesten Zugmittelscheibe (60, 65) und in eine in der ersten Zugmittelscheibe (68) vorgesehene Bohrung (67, 80) einsteckbar ist.

19. Antriebsvorrichtung nach einem oder mehreren der vorherigen Ansprüche, dadurch gekennzeichnet, dass das auf der Nabe des Eingangssonnenrades (98) angeordnete Drehmomentenrad (232) ein Ringrad (238) aufweist, an dem mittels eines Abscherbolzens (252) ein eine Anschlussöse (250) aufweisendes Verbindungsstück angeschlossen ist, das mit einer Nut versehen ist, die auf einer am Aussenumfang des Drehmomentenrades (232) vorgesehenen Rippe (244) aufgesetzt ist.

20. Antriebsvorrichtung nach Anspruch 4 und eventuell einem oder mehreren der darauf folgenden Ansprüche, dadurch gekennzeichnet, dass das Drehmomentenrad (232) eine sich vom Aussenumfang radial nach innen erstreckende Bohrung (246) aufweist, in die der Abscherbolzen (252) einsteckbar ist, der zum lösbaren Anschluss eines die Anschlussöse (250) aufweisenden Gestänges (38') dient, das mit seinem einen Ende am Rahmen des Mähdreschers um eine Achse schwenkbar gelagert ist, die parallel zur Achse des Drehmomentenrades verläuft, wobei das Gestänge (38') nach Abscheren des Abscherbolzens (252) über eine an das Gestänge (38') angeschlossene Feder (300) von dem Drehmomentenrad (232) wegschwenkbar ist.

21. Antriebsvorrichtung nach den Ansprüchen 19 und 20, dadurch gekennzeichnet, dass zwischen dem Gestänge (38') und dem Drehmomentenrad (232) ein Scherbolzenanschlussteil (242) vorgesehen ist, das einenends die Anschlussöse (250) mit einer parallel zur Achse des Drehmomentenrades (232) verlaufenden Bohrung (258) zum gelenkigen Anschluss des Gestänges (38') und anderenends die radial zur Achse des Drehmomentenrads (232) verlaufende Bohrung (246, 254) zur Aufnahme des Abscherbolzens (252) aufweist, die sich durch die auf die Rippe (244) aufsetzbare Nut erstreckt, wobei das Verbindungsstück im Bereich der oberen durch eine Totpunktlage verlaufenden Stelle des Drehmomentenrades (232) an das Drehmomentenrad angeschlossen ist.

22. Antriebsvorrichtung nach Anspruch 20 oder 21, dadurch gekennzeichnet, dass an dem Gestänge (38') ein sich über das abscherseitige Ende (Gabel 280) des Gestänges (38') erstreckender Hebel (286) zur Verschwenkung des Gestänges (38') gegen die Wirkung einer Feder (300) in Richtung des Drehmomentenrades (232) vorgesehen ist und der nach Abscheren des Abscherbolzens (252) mittels der Feder (300) gegen einen Anschlag (316) heranziehbar ist.

23. Antriebsvorrichtung nach Anspruch 21, dadurch gekennzeichnet, dass die Abscheroberfläche (256), gegen die das Scherbolzenanschlussteil (242) anliegt, konzentrisch zur Achse des Drehmomentenrades (232) verläuft.

24. Antriebsvorrichtung nach Anspruch 23, dadurch gekennzeichnet, dass der Radius der Abscheroberfläche (256) des Scherbolzenanschlussteils (242) grösser ist als der Radius des Ringrades (238).

25. Antriebsvorrichtung nach einem oder mehreren der Ansprüche 16 bis 19, dadurch gekennzeichnet, dass die mit der Welle (36) drehfest verbundene Zugmittelscheibe (68) zum Antrieb einer Strohleittrommel (61) dient.

**Claims**

1. A drive arrangement for a machine which can be used for agricultural purposes, having a transmission which has at least two speed ranges, in particular a planetary transmission (90), which is integrated within an opening in a traction means pulley (68) with which there is associated a coupling element, for example a torque spider (128) or a torque wheel (232), which for transmission shift purposes is mounted rotatably on a shaft (36) of the transmission (90) and fixes on the one hand an input member, for example an input sun wheel (98), of the transmission (90) to the housing (12) of the machine and on the other hand to the traction means pulley (68), characterised in that provided between the coupling element (128, 232) and the housing (12) is a link (148, 250) which is formed as an overload safety device and which is connected by way of a shearing pin (150, 252) to the coupling element (128, 232) or to the housing.

2. A drive arrangement according to claim 1 characterised in that the coupling element is formed as a torque spider (128) which is rotatably and fixably mounted on the shaft (36) and fixedly connected to the input member (98).

3. A drive arrangement according to claim 1 characterised in that the link (148) of the overload safety device is pivotally connected at one end to a control arm (134) of the torque spider (128) and at the other end, directly or indirectly, to a frame or to the housing (12) of the machine.

4. A drive arrangement according to claim 1 and claim 3 characterised in that the link (148) of the overload safety device is pivotally connected to a linkage (38) which is pivotally mounted to the frame of the machine and which, after release of the link (148), is automatically pivotable by way of a spring (176) into a position in which it does not impede the rotary movement of the torque spider (128).

5. A drive arrangement for driving a threshing drum (11) which is provided in a combine harvester and which is mounted on a shaft (36) extending through the planetary transmission (90), according to claim 1, characterised in that the planetary transmission (90) is disposed in a housing (85) which is a component of the traction means pulley (68), wherein the width, extending in the axial direction of the shaft (36), of the planetary transmission (90) approximately corresponds to the overall width of the traction means pulley (68) which is arranged close to a side wall (13) of the housing (12) of the combine harvester.

6. A drive arrangement according to one or more of the preceding claims characterised in that the planetary transmission (90) is formed from a first sun wheel (94) non-rotatably mounted on the shaft (36) and a second sun wheel (98) rotatably mounted on the shaft (36) and fixedly connected to the torque spider (128), and a double planet wheel (122, 124) which is connected to the outside of the traction means pulley (68) by way of a planet wheel cage (110), wherein the first sun wheel (94) is larger than the second sun wheel (98) so that when the planetary transmission is in the condition for indirect drive, the speed of rotation of the shaft (36) is lower than the speed of rotation of the traction means pulley (68).

7. A drive arrangement according to one or more of the preceding claims characterised in that the housing (85) which is integrated in the traction means pulley (68) is formed from a pulley rim portion (74), a side wall which is inward with respect to the side wall (13) of the combine harvester, and an outward side wall, wherein the outward side wall is formed as the planet wheel cage (110) which is releasably connected by way of screw bolts (92) to the traction means pulley (68).

8. A drive arrangement according to claim 7 characterised in that disposed in each side wall of the housing (85) for receiving the planetary transmission (90) is a rolling bearing assembly (58) arranged coaxially with respect to the shaft (36) for rotatably carrying the traction means pulley (68).

9. A drive arrangement according to one or more of the preceding claims characterised in that the second sun wheel (98) has an axially extending hub for carrying the rolling bearing assembly (58) which is arranged in the outward side wall.

10. A drive arrangement according to claim 9 characterised in that the torque spider (128) is non-rotatably disposed on the hub of the second sun wheel (98).

11. A drive arrangement according to one or more of the preceding claims characterised in that a control arm (132) of the torque spider (128) can be selectively connected to the traction means pulley (68) by way of a releasable connecting element, for example a pin (182), which can be fitted into an opening (138) on the control arm (132) and into an opening (80) on the traction means pulley (68), which can be aligned with respect to the opening (138).

12. A drive arrangement according to claim 1 characterised in that the coupling element comprises a torque spider (128) having two radially extending control arms (132, 134), wherein the one arm (132) which has an opening (138) can be selectively connected to the traction means pulley (68) and the other arm (134) can be selectively connected to the housing (12) of a combine harvester by way of a shearing pin (150), wherein the connecting points of the arms are on radii of different magnitudes.

13. A drive arrangement according to one or more of the preceding claims characterised in that the torque spider (28) is arranged close to the outside of the traction means pulley (68).

14. A drive arrangement according to one or more of the preceding claims characterised in that the traction means pulley (68) has two end faces which extend in parallel relationship to each other and which are at a spacing from each other which is larger than the overall width of the planetary transmission (90).

15. A drive arrangement according to claim 1 characterised in that the drivable traction means pulley (68) has a pulley portion (62) to which the drive is applied and which, for a first drive speed, can be selectively non-rotatably connected to the shaft (36), wherein the input sun wheel (98) of the planetary transmission (90) can be selectively directly or indirectly non-rotatably connected to a threshing housing (12), for a second drive speed.

16. A drive arrangement according to one or more of the preceding claims characterised in that a second traction means pulley (60, 65) is disposed on the shaft (36) besides the drivable traction means pulley (68) and is non-rotatably connected to the shaft, wherein the first traction means pulley (68) can be selectively connected to the non-rotatable traction means pulley (60) by way of a connecting element, for example a plug-type connection (306), or the torque wheel (232) which is non-rotatably connected to the input sun wheel (98) can be selectively directly or indirectly connected to a threshing housing (12) by way of the same connecting element.

17. A drive arrangement according to one or more of the preceding claims characterised in that the non-rotatable traction means pulley (60, 65) has a flange which is disposed within an axial recess in the pulley portion (66) to which the drive is applied.

18. A drive arrangement according to claim 16 characterised in that the connecting element (306) has at least one pin (308) which can be fitted into bores (67, 80) provided in the flange of the non-rotatable traction means pulley (60, 65) and in the first traction means pulley (68).

19. A drive arrangement according to one or more of the preceding claims characterised in that the torque wheel (232) which is disposed on the hub of the input sun wheel (98) has a ring wheel (238) to which a connecting member having a connecting eye (250) is connected by means of a shearing pin (252), said connecting member being provided with a groove which is fitted on a rib (244) provided at the outside periphery of the torque wheel (232).

20. A drive arrangement according to claim 4 and optionally one or more of the following claims characterised in that the torque wheel (232) has a bore (246) which extends radially inwardly from the outside periphery and into which can be fitted the shearing pin (232) which serves for releasably connecting a linkage (38') which has the connecting eye (250) and which, with its one end, is connected to the frame of the combine harvester pivotably about an axis which extends parallel to the axis of the torque wheel, wherein the linkage (38'), after shearing of the shearing pin (252), can be pivoted away from the torque wheel (232) by way of a spring (300) connected to the linkage (38').

21. A drive arrangement according to claims 19 and 20 characterised in that provided between the linkage (38') and the torque wheel (232) is a shear pin connecting member (242) which at one end has the connecting eye (250) with a bore (258) extending parallel to the axis of the torque wheel (232) for pivotally connecting the linkage (38') and at the other end has the bore (246, 254) for receiving the shearing pin (252), the bore (246, 254) extending radially with respect to the axis of the torque wheel (232) and passing trough the groove which can be fitted on to the rib (244), wherein the connecting member is connected to the torque wheel in the region of the upper location of the torque wheel (232), which passes through a dead centre position.

22. A drive arrangement according to claim 20 or claim 21 characterised in that provided on the linkage (38') is a lever (286) which extends over the shearing end (fork 280) of the linkage (38') for pivoting the linkage (38') against the force of a spring (300) in the direction of the torque wheel (232), which lever can be pulled towards an abutment (316) by means of the spring (300) after the shearing pin (252) has sheared.

23. A drive arrangement according to claim 21 characterised in that the shearing surface (256) against which the shearing pin connecting member (242) bears extends conçentrically with respect to the axis of the torque wheel (232).

24. A drive arrangement according to claim 23 characterised in that the radius of the shearing surface (256) of the shearing pin connecting member (242) is larger than the radius of the ring wheel (238).

25. A drive arrangement according to one or more of claims 16 to 19 characterised in that the traction means pulley (68) which is non-rotatably connected to the shaft (36) serves for driving a straw conveying drum (61).

**Revendications**

1. Dispositif d'entraînement pour machine utilisable en agriculture comportant un mécanisme fournissant au moins deux gammes de régimes, en particulier un train épicycloïdal (90) qui est intégré à l'intérieur d'un évidement d'une poulie (68) à laquelle est conjugué un élément d'accouplement, par exemple un palonnier de couple (128) ou une roue de couple (232), qui est montée à rotation sur un arbre (36) du mécanisme (90) pour la commande de ce mécanisme et qui solidarise séléctivement un organe d'entrée, par exemple un planétaire d'entrée (98) du mécanisme (90), avec le carter (12) de la machine ou avec la poulie (68), caractérisé en ce qu'il est prévu, entre l'élément d'accouplement (128, 232) et le carter (12), une biellette (148, 250) agencée pour constituer une sécurité en cas de surcharge, qui est raccordée par l'intermédiaire d'un axe de cisaillement (150, 252) à l'élément d'accouplement (128, 232) ou au carter.

2. Dispositif d'entraînement suivant la revendication 1, caractérisé en ce que l'élément d'accouplement est constitué par un palonnier de couple (128) qui est monté à rotation sur l'arbre (36) en pouvant être bloqué sur lui et qui est relié rigidement à l'organe d'entrée (98).

3. Dispositif d'entraînement suivant la revendication 1, caractérisé en ce que la biellette (148) du dispositif de sécurité en cas de surcharge est reliée à articulation par une extrémité à un bras de réglage (134) du palonnier de couple (128) et par son autre extrémité directement ou indirectement à un bâti ou au carter (12) de la machine.

4. Dispositif d'entraînement suivant les revendications 1 et 3, caractérisé en ce que la biellette (148) du dispositif de sécurité en cas de surcharge est reliée da façon articulée à une tringlerie (38) montée de façon pivotante sur le châssis de la machine, cette tringlerie pouvant, après sa séparation par rapport à la biellette (148), être ramenée automatiquement par pivotement, au moyen d'un ressort (176), dans une position ne gênant pas le mouvement de rotation du palonnier de couple (128).

5. Dispositif d'entraînement pour l'entraînement d'un batteur (11) prévu dans une moissonneuse-batteuse et monté sur l'arbre (36) s'étendant à travers le train épicycloïdal (90), suivant la revendication 1, caractérisé en ce que le train épicycloïdal (90) est logé dans un carter (85) qui forme une partie de la poulie (68), la largeur du train épicycloïdal (90), mesurée dans la direction axiale de l'arbre (36), correspondant sensiblement à la largeur totale de la poulie (68), qui est disposée au voisinage immédiat d'une paroi latérale (13) du carter (12) de la moissonneuse-batteuse.

6. Dispositif d'entraînement suivant une ou plusieurs des revendications précédentes, caractérisé en ce que le train épicycloïdal (90) est constitué par un premier planétaire (94) calé angulairement sur l'arbre (36) et par un second planétaire (98) monté à rotation sur l'arbre (36) et relié rigidement au palonnier de couple (128), ainsi que par un satellite à deux étages (122, 124), qui est relié lui-même par un porte-satellites (110) au côté extérieur de la poulie (68), le premier planétaire (94) ayant un diamètre supérieur à celui du second planétaire (98), de sorte que lors de l'enclenchement du train épicycloïdal en vue d'un entraînement indirect, le régime de rotation de l'arbre (36) est plus faible que le régime de rotation de la poulie (68).

7. Dispositif d'entraînement suivant une ou plusieurs des revendications précédentes, caractérisé en ce que le carter (85) intégré à la poulie (68) est constitué par une couronne (74), une paroi latérale située à l'intérieur par rapport à la paroi latérale (13) de la moissonneuse-batteuse, et une paroi latérale extérieure, cette paroi latérale extérieure se présentant sous la forme d'un porte-satellites (110) qui est relié amoviblement à la poulie (68) par des vis ou boulons (92).

8. Dispositif d'entraînement suivant la revendication 7, caractérisé en ce qu'il est prévu dans chacune des parois latérales du carter (85), pour la réception du train épicycloïdal (90), un roulement (58) monté coaxialement à l'arbre (36), pour le montage à rotation de la poulie (68).

9. Dispositif d'entraînement suivant une ou plusieurs des revendications précédentes, caractérisé en ce que le second planétaire (98) comporte un moyeu s'étendant axialement pour la réception du roulement (58) monté dans la paroi latérale extérieure.

10. Dispositif d'entraînement suivant la revendication 9, caractérisé en ce que le palonnier de couple (128) est calé angulairement sur le moyeu du second planétaire (98).

11. Dispositif d'entraînement suivant une ou plusieurs des revendications précédentes, caractérisé en ce qu'un bras de réglage (132) de palonnier de couple (128) peut être relié sélectivement par un élément de liaison amovible, par exemple un axe (182), à la poulie (68), cet élément pouvant être inséré dans un évidement (138) prévu dans le bras de réglage (132) et dans un évidement (80) pouvant être amené dans une position d'alignement avec le précédent et prévu dans la poulie (68).

12. Dispositif d'entraînement suivant la revendication 1, caractérisé en ce que l'élément d'accouplement est constitué par un palonnier de couple (128) comportant deux bras (132, 134) s'étendant radialement, dont l'un (bras 132), comportant un évidement (138), peut être raccordé sélectivement à la poulie (68), tandis que l'autre bras (134) peut être raccordé sélectivement par l'intermédiaire de l'axe de cisaillement (150) au carter (12) d'une moissonneuse-batteuse, les points de raccordement des bras se trouvant sur des rayons différents.

13. Dispositif d'entraînement suivant une ou plusieurs des revendications précédentes, caractérisé en ce que le palonnier de couple (128) est disposé au voisinage immédiat de la face extérieure de la poulie (68).

14. Dispositif d'entraînement suivant une ou plusieurs des revendications précédentes, caractérisé en ce que la poulie (68) comporte deux faces terminales parallèles entre elles, écartées l'une de l'autre d'une distance supérieure à la largeur totale du train épicycloïdal (90).

15. Dispositif d'entraînement suivant la revendication 1, caractérisé en ce que la poulie menée (68) comporte un corps (66) auquel l'entraînement est transmis et qui peut être relié rigidement de façon sélective à l'arbre (36) pour fournir une première vitesse d'entraînement, tandis que le planétaire d'entrée (98) du train épicycloïdal (120) peut être relié rigidement en rotation de façon sélective, directement ou indirectement, au carter (12) pour fournir une seconde vitesse d'entraînement.

16. Dispositif d'entraînement suivant une ou plusieurs des revendications précédentes, caractérisé en ce qu'il est prévu, a côté de la poulie menée (68), une seconde poulie (60, 65) montée sur l'arbre (36) et reliée rigidement à cet arbre, la première poulie (68) pouvant être reliée sélectivement à la poulie calée angulairement (60) par un élément de liaison, par exemple une liaison à enfichage (306), ou bien la roue de couple (232) calée angulairement sur le planétaire d'entrée (98) pouvant être reliée sélectivement, da façon directe ou indirecte, à un carter (12) de batteur par le même élément de liaison.

17. Dispositif d'entraînement suivant une ou plusieurs des revendications précédentes, caractérisé en ce que la poulie calée angulairement (60, 65) présente une bride se trouvant à l'intérieur d'un décolletage axial du corps de poulie (66) à laquelle l'entraînement est transmis.

18. Dispositif d'entraînement suivant la revendication 16, caractérisé en ce que l'élément de liaison (306) comprend au moins un axe (308) qui peut être introduit dans un perçage (67) prévu dans la bride de la poulie calée angulairement (60, 65) et dans un perçage (80) prévu dans la première poulie (68).

19. Dispositif d'entraînement suivant une ou plusieurs des revendications précédentes, caractérisé en ce que la roue de couple (232) disposé sur le moyeu du planétaire d'entrée (98) comporte une jante ou couronne (238) à laquelle une pièce de liaison comportant une patte de raccordement (250) est raccordée au moyen d'un axe de cisaillement (252), cette pièce de liaison étant munie d'une rainure qui est engagée sur une nervure (244) prévue à la périphérie extérieure de la roue de couple (232).

20. Dispositif d'entraînement suivant la revendication 4 et éventuellement une ou plusieurs des revendications qui la suivent, caractérisé en ce que la roue de couple (232) comporte un perçage (246) s'étendant radialement vers l'intérieur depuis sa périphérie extérieure et dans lequel peut être introduit l'axe de cisaillement (252) servant au raccordement amovible d'une tringlerie (38') comportant la patte de raccordement (250), cette tringlerie étant montée à pivotement sur le châssis de la moissonneuse-batteuse par une extrémité, autour d'un axe qui est parallèle à l'axe de la roue de couple, la tringlerie (38') pouvant, après cisaillement de l'axe (252), s'écarter par pivotement de la roue de couple (232) sous l'action d'un ressort (300) relié à cette tringlerie (38').

21. Dispositif d'entraînement suivant les revendications 19 et 20, caractérisé en ce qu'il est prévu, entre la tringlerie (38') et la roue de couple (232), une pièce de liaison d'axe de cisaillement (242) qui comporte à une extrémité la patte de raccordement (250) munie d'un perçage (258) s'étendant parallèlement à l'axe de la roue de couple (232), pour le raccordement articulé de la tringlerie (38'), et qui comporte à l'autre extrémité le perçage (246, 254) s'étendant radialement à l'axe de la roue de couple (232) pour la réception de l'axe de cisaillement (252), qui s'étend à travers la rainure engagée sur la nervure (244), la pièce de liaison étant raccordée à la roue de couple (232) dans une zone de la partie supérieure de cette roue passant par une position de point mort.

22. Dispositif d'entraînement suivant la revendication 20 ou 21, caractérisé en ce qu'il est prévu, sur la tringlerie (38') un levier (286) s'étendant au-delà de l'extrémité côté cisaillement (chape 280) de la tringlerie (38') pour assurer le pivotement de la tringlerie (38') en antagonisme à l'action d'un ressort (300) en direction de la roue de couple (232), et qui après cisaillememt de l'axe de cisaillement (252) peut être rappelé au moyen du ressort (300) contre une butée (316).

23. Dispositif d'entraînement suivant la revendication 21, caractérisé en ce que la surface de cisaillement (256) contre laquelle la pièce de liaison d'axe de cisaillement (242) s'applique est concentrique à l'axe de la roue de changement de couple (232).

24. Dispositif d'entraînement suivant la revendication 23, caractérisé en ce que le rayon de la surface de cisaillement (256) de la pièce de liaison d'axe de cisaillement (242) est supérieur au rayon de la coutonne (238).

25. Dispositif d'entraînement suivant une ou plusieurs des revendications 16 à 19, caractérisé en ce que la poulie (65) calée angulairement sur l'arbre (36) sert à l'entraînement d'un tambour guide-paille (61).

FIG. I

FIG. 2

0 074 097

19

# FIG. 5

# FIG. 3

# FIG. 4

FIG. 6

FIG. 7

FIG. 8

FIG. 9

FIG. 10

FIG. 11

FIG. 12